(19) 

Europäisches
Patentamt
European
Patent Office
Office européen
des brevets

(11)  **EP 4 580 108 A1**

(12) **EUROPEAN PATENT APPLICATION**
published in accordance with Art. 153(4) EPC

(43) Date of publication:
02.07.2025  Bulletin 2025/27

(21) Application number: 23867504.5

(22) Date of filing: 19.09.2023

(51) International Patent Classification (IPC):
*H04L 5/00* (2006.01)

(52) Cooperative Patent Classification (CPC):
H04L 5/00; H04W 72/0446; H04W 72/0453;
H04W 72/25; H04W 72/566

(86) International application number:
PCT/CN2023/119729

(87) International publication number:
WO 2024/061217 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.09.2022  CN 202211145040

(71) Applicant: Huawei Technologies Co., Ltd.
Shenzhen, Guangdong 518129 (CN)

(72) Inventors:
• HUANG, Su
  Shenzhen, Guangdong 518129 (CN)
• LI, Cheng
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54)  **COMMUNICATION METHOD AND RELATED APPARATUS**

(57)  Embodiments of this application disclose a communication method and a related apparatus. The method in embodiments of this application includes: A first terminal device sends a first request to a second terminal device, where the first request is used to request the second terminal device to send a first positioning reference signal; the first request includes at least one of the following: first information, second information, third information, fourth information, or fifth information; the first information indicates the first terminal device to request the second terminal device to send the first positioning reference signal; the second information indicates a time domain feature that needs to be met by the first positioning reference signal; the third information indicates a positioning method used to position the first terminal device and/or the second terminal device; the fourth information indicates a transmission priority of the first positioning reference signal; and the fifth information indicates a frequency domain feature that needs to be met by the first positioning reference signal; and the first terminal device receives the first positioning reference signal from the second terminal device.

FIG. 7

EP 4 580 108 A1

**Description**

This application claims priority to Chinese Patent Application No. 202211145040.6, filed with the China National Intellectual Property Administration on September 20, 2022 and entitled "COMMUNICATION METHOD AND RELATED APPARATUS", which is incorporated herein by reference in its entirety.

**TECHNICAL FIELD**

This application relates to the field of communication technologies, and in particular, to a communication method and a related apparatus.

**BACKGROUND**

Terminal devices may be connected to each other through an adjacent communication 5 (ProSe communication 5, PC5) interface, and communicate with each other by using a sidelink (sidelink, SL). For example, a first terminal device may send a positioning reference signal to a second terminal device by using a sidelink, so that the first terminal device positions the sidelink between the first terminal device and/or the second terminal device. However, in a sidelink positioning process, how the first terminal device triggers the second terminal device to send a positioning reference signal is a problem that needs to be considered.

**SUMMARY**

This application provides a communication method and a related apparatus, so that a first terminal device sends, to a second terminal device, a first request used to request the second terminal device to send a first positioning reference signal, to trigger the second terminal device to send the first positioning reference signal to the first terminal device based on the first request. This facilitates positioning of a sidelink between the first terminal device and the second terminal device.

A first aspect of this application provides a communication method, including:

The first terminal device sends a first request to a second terminal device, where the first request is used to request the second terminal device to send a first positioning reference signal. The first request includes at least one of the following: first information, second information, third information, fourth information, or fifth information; the first information indicates the first terminal device to request the second terminal device to send the first positioning reference signal; the second information indicates a time domain feature that needs to be met by the first positioning reference signal; the third information indicates a positioning method used to position the first terminal device and/or the second terminal device; the fourth information indicates a transmission priority of the first positioning reference signal; and the fifth information indicates a frequency domain feature that needs to be met by the first positioning reference signal. Then, the first terminal device receives the first positioning reference signal from the second terminal device.

It can be learned from the foregoing technical solution that the first terminal device may send, to the second terminal device, the first request used to request the second terminal device to send the first positioning reference signal to trigger the second terminal device to send the first positioning reference signal to the first terminal device, thereby implementing sidelink positioning between the first terminal device and the second terminal device. Further, the first request includes at least one of the following: the first information, the second information, the third information, the fourth information, or the fifth information. The first information indicates the first terminal device to request the second terminal device to send the first positioning reference signal. The second information indicates the time domain feature that needs to be met by the first positioning reference signal. The third information indicates the positioning method used to position the first terminal device and/or the second terminal device. The fourth information indicates the transmission priority of the first positioning reference signal. The fifth information indicates the frequency domain feature that needs to be met by the first positioning reference signal. In this way, the second terminal device sends the first positioning reference signal based on the information, so that the first terminal device is supported in performing sidelink positioning, thereby improving positioning accuracy.

A second aspect of this application provides a communication method, including:

A second terminal device receives a first request from a first terminal device, where the first request is used to request the second terminal device to send a first positioning reference signal. The first request includes at least one of the following: first information, second information, third information, fourth information, or fifth information; the first information indicates the first terminal device to request the second terminal device to send the first positioning reference signal; the second information indicates a time domain feature that needs to be met by the first positioning reference signal; the third information indicates a positioning method used to position the first terminal device and/or the second terminal device; the fourth information indicates a transmission priority of the first positioning reference signal; and the fifth information indicates a frequency domain feature that needs to be met by the first positioning reference signal. Then, the second terminal device sends the first positioning reference signal to the first terminal device based on the first request.

It can be learned from the foregoing technical solution that the second terminal device receives the first request from the first terminal device, so that the second terminal device sends the first positioning reference signal to the first terminal device based on the first request. This facilitates positioning of a sidelink between the first terminal device and the second terminal device. Further, the first request includes at least one of the following: the first information, the second information, the third information, the fourth information, or the fifth information. The first information indicates the first terminal device to request the second terminal device to send the first positioning reference signal. The second information indicates the time domain feature that needs to be met by the first positioning reference signal. The third information indicates the positioning method used to position the first terminal device and/or the second terminal device. The fourth information indicates the transmission priority of the first positioning reference signal. The fifth information indicates the frequency domain feature that needs to be met by the first positioning reference signal. The second terminal device sends the first positioning reference signal based on the information, so that the first terminal device is supported in performing sidelink positioning, thereby improving positioning accuracy.

Based on the first aspect or the second aspect, in a possible implementation, the time domain feature includes at least one of the following: the first positioning reference signal is sent at a slot level, a subslot level, or a time domain symbol level; the first positioning reference signal occupies at least one slot or at least one time domain symbol; when the at least one slot includes a plurality of slots, the plurality of slots include a consecutive slot and/or a non-consecutive slot; or when the at least one time domain symbol includes a plurality of time domain symbols, the plurality of time domain symbols include a consecutive time domain symbol and/or a non-consecutive time domain symbol.

In this implementation, some specific details of the time domain feature are shown. For example, the first positioning reference signal is sent at the slot level, the subslot level, or the time domain symbol level, so that the first terminal device requests, based on an actual requirement, the second terminal device to send the first positioning reference signal meeting the time domain feature. This helps the first terminal device accurately position the first terminal device and/or the second terminal device by using the first positioning reference signal, thereby improving positioning accuracy.

Based on the first aspect or the second aspect, in a possible implementation, the frequency domain feature includes at least one of the following: a sending bandwidth of the first positioning reference signal, a resource pool in which the sending bandwidth is located, or a frequency occupied by the first positioning reference signal.

In this implementation, some specific details of the frequency domain feature are shown, for example, the sending bandwidth of the first positioning reference signal, because a sending bandwidth of a positioning reference signal affects the positioning accuracy. The first terminal device may request, based on an actual requirement, the second terminal device to send the first positioning reference signal of a corresponding bandwidth, thereby improving the positioning accuracy.

Based on the first aspect or the second aspect, in a possible implementation, the positioning method includes any one of the following: a round trip time (round trip time, RTT) positioning method, an angle of arrival (angle of arrival, AOA) positioning method, an angle of departure (angle of departure, AOD) positioning method, or a time difference of arrival (time difference of arrival, TDOA) positioning method.

In this implementation, some possible positioning methods are shown, so that the first terminal device selects a proper positioning method based on an actual requirement, a capability of the first terminal device, and a capability of the second terminal device. Therefore, the first terminal device is supported in positioning the first terminal device and/or the second terminal device by using a corresponding positioning method.

Based on the first aspect or the second aspect, in a possible implementation, when the positioning method is the AOD positioning method, the first request further includes sixth information, and the sixth information indicates an AOD angle positioning mode used for the first positioning reference signal.

In this implementation, if the positioning method is the AOD positioning method, the first terminal device may further indicate, to the second terminal device, the AOD angle positioning mode used for the first positioning reference signal. In this way, the second terminal device sends the first positioning reference signal by using the AOD angle positioning mode indicated by the first terminal device. Therefore, the first terminal device is supported in performing positioning by using the AOD positioning method.

Based on the first aspect or the second aspect, in a possible implementation, the third information indicates the AOD angle positioning mode used for the first positioning reference signal, to indicate, by using the AOD angle positioning mode indicated by the third information, that the positioning method is the AOD positioning method.

In this implementation, the first terminal device may indicate the AOD angle positioning mode by using the third information, to indirectly indicate the first terminal device to use the AOD positioning method, thereby reducing indication overheads. Further, the second terminal device sends the first positioning reference signal by using the AOD angle positioning mode indicated by the first terminal device. Therefore, the first terminal device is supported in performing positioning by using the AOD positioning method.

Based on the first aspect or the second aspect, in a possible implementation, the AOD angle positioning mode used for the first positioning reference signal includes a first mode or a second mode, the first mode includes that the second terminal device sends the first positioning reference signal in a beam switching manner, and the second mode includes that the second terminal device sends the first positioning reference signal in an antenna switching manner.

In this implementation, two possible modes of the AOD angle positioning mode are shown. The first mode includes that the second terminal device sends the first positioning reference signal in the beam switching manner. The second mode includes that the second terminal device sends the first positioning reference signal in the antenna switching manner. In this way, the first terminal device indicates a corresponding mode to the second terminal device to support the first terminal device in performing positioning by using the AOD positioning method.

Based on the first aspect or the second aspect, in a possible implementation, the first information further indicates whether the first terminal device sends a second positioning reference signal to the second terminal device. In this way, the first terminal device efficiently indicates whether the first terminal device sends a positioning reference signal and indicates the second terminal device to send a positioning reference signal, thereby reducing communication overheads.

Based on the first aspect or the second aspect, in a possible implementation, the first information is indication information; and when a value of the indication information is a first value, it indicates that the first terminal device requests the second terminal device to send the first positioning reference signal and the first terminal device sends the second positioning reference signal to the second terminal device; or when a value of the indication information is a second value, it indicates that the first terminal device requests the second terminal device to send the first positioning reference signal and the first terminal device does not send the second positioning reference signal to the second terminal device.

Based on the first aspect or the second aspect, in a possible implementation, the first information is carried in sidelink control information (sidelink control information, SCI), and at least one of the second information, the third information, the fourth information, and the fifth information is carried in a sidelink media access control control element (sidelink control information media access control control element, SL MAC CE).

In this implementation, the first information may be carried in the SCI, and at least one of the second information, the third information, the fourth information, and the fifth information is carried in the SL MAC CE. Both the SCI and the SL MAC CE are signaling below layer 2. This helps reduce a delay in parsing the first information to the fifth information by the second terminal device, so that the first terminal device efficiently performs positioning.

Based on the first aspect or the second aspect, in a possible implementation, the first request is carried in the SCI or the SL MAC CE. In this implementation, the first request may be carried in the SCI or the SL MAC CE to help reduce a delay in parsing the first request by the second terminal device, so that the first terminal device efficiently performs positioning.

Based on the first aspect, in a possible implementation, the method further includes: The first terminal device obtains a first measurement result, where the first measurement result is obtained by the first terminal device through measurement based on the first positioning reference signal; and the first terminal device positions the first terminal device and/or the second terminal device based on the first measurement result.

In this implementation, the first terminal device may obtain the first measurement result based on the first positioning reference signal to position the first terminal device and/or the second terminal device based on the first measurement result.

Based on the first aspect, in a possible implementation, after the first terminal device sends the first request to the second terminal device, and before the first terminal device receives the first positioning reference signal from the second terminal device, the method further includes:

The first terminal device sends a second positioning reference signal to the second terminal device. In this implementation, the first terminal device may further send the second positioning reference signal to the second terminal device, so that the first terminal device is supported in performing round trip time positioning.

Based on the first aspect, in a possible implementation, the method further includes: The first terminal device obtains a first measurement result, where the first measurement result is obtained by the first terminal device through measurement based on the first positioning reference signal; the first terminal device receives a second measurement result from the second terminal device, where the second measurement result is obtained by the second terminal device through measurement based on the second positioning reference signal; and the first terminal device positions the first terminal device and/or the second terminal device based on the first measurement result and the second measurement result. In this implementation, the first terminal device positions the first terminal device and/or the second terminal device based on the first measurement result and the second measurement result, so that the first terminal device is supported in performing round trip time positioning.

Based on the second aspect, in a possible implementation, after the second terminal device receives the first request from the first terminal device, and before the second terminal device sends the first positioning reference signal to the first terminal device based on the first request, the method further includes: The second terminal device receives the second positioning reference signal from the first terminal device.

In this implementation, the second terminal device receives the second positioning reference signal from the first terminal device. In this way, the second terminal device obtains a receive-transmit time difference between a receiving time of the second positioning reference signal and a sending time of the first positioning reference signal, so that the first terminal device is supported in performing round trip time positioning.

Based on the second aspect, in a possible implementation, the method further includes: The second terminal device obtains the second measurement result through measurement based on the second positioning reference signal; and the second terminal device sends the second measurement result to the first terminal device. In this way, the first terminal device positions the first terminal device and/or the second terminal device based on the second measurement result.

Based on the first aspect, in a possible implementation, the method further includes: The first terminal device receives a second request from the second terminal device, where the second request is used to request the first terminal device to send a third positioning reference signal. After the first terminal device receives the first positioning reference signal from the second terminal device, the method further includes: The first terminal device sends the third positioning reference signal to the second terminal device.

In this implementation, the first terminal device receives the second request from the second terminal device to trigger the first terminal device to send the third positioning reference signal to the second terminal device. This helps the second terminal device obtain a corresponding measurement result by using the first positioning reference signal and the third positioning reference signal, and feed back the measurement result to the first terminal device. In this way, the first terminal device positions the first terminal device and/or the second terminal device based on the measurement result.

Based on the first aspect, in a possible implementation, the method further includes: The first terminal device sends a third request to the second terminal device, where the third request is used to request the second terminal device to send a fourth positioning reference signal. After the first terminal device sends the third positioning reference signal to the second terminal device, the method further includes: The first terminal device receives the fourth positioning reference signal from the second terminal device.

In this implementation, the first terminal device may further send the third request to the second terminal device. Then, the first terminal device receives the fourth positioning reference signal from the second terminal device. In this way, the first terminal device positions the first terminal device and/or the second terminal device by using the first positioning reference signal and the fourth positioning reference signal.

Based on the second aspect, in a possible implementation, the method further includes: The second terminal device sends a second request to the first terminal device, where the second request is used to request the first terminal device to send the third positioning reference signal. After the second terminal device sends the first positioning reference signal to the first terminal device based on the first request, the method further includes: The second terminal device receives the third positioning reference signal from the first terminal device. In this way, the second terminal device obtains a corresponding measurement result by using the first positioning reference signal and the third positioning reference signal, and feeds back the measurement result to the first terminal device. In this way, the first terminal device positions the first terminal device and/or the second terminal device based on the measurement result.

Based on the second aspect, in a possible implementation, the method further includes: The second terminal device receives a third request from the first terminal device, where the third request is used to request the second terminal device to send a fourth positioning reference signal. After the second terminal device receives the third positioning reference signal from the first terminal device, the method further includes: The second terminal device sends the fourth positioning reference signal to the first terminal device. In this way, the first terminal device positions the first terminal device and/or the second terminal device by using the first positioning reference signal and the fourth positioning reference signal.

Based on the first aspect, in a possible implementation, the method further includes: The first terminal device sends a fourth request to the third terminal device, where the fourth request is used to request a third terminal device to send a fifth positioning reference signal; and the first terminal device receives the fifth positioning reference signal from the third terminal device. In this way, the first terminal device positions at least one of the first terminal device, the second terminal device, and the third terminal device based on the first positioning reference signal and the fifth positioning reference signal.

Based on the first aspect, in a possible implementation, before the first terminal device sends the first request to the second terminal device, the method further includes: The first terminal device receives seventh information from the second terminal device, where the seventh information indicates whether the second terminal device accepts the first request initiated by the first terminal device to the second terminal device. In this implementation, the first terminal device receives, from the second terminal device, the seventh information indicating whether the second terminal device accepts the first request initiated by the first terminal device to the second terminal device. In this way, the first terminal device determines whether the second terminal device supports sending of the first positioning reference signal to the first terminal device, so that the first terminal device selects a proper terminal device to assist the first terminal device in positioning.

Based on the second aspect, in a possible implementation, before the first terminal device sends the first request to the second terminal device, the method further includes: The second terminal device sends seventh information to the first terminal device, where the seventh information indicates whether the second terminal device accepts the first request initiated by the first terminal device to the second terminal device. In this way, the first terminal device determines whether the second terminal device supports sending of the first positioning reference signal to the first terminal device, so that the first terminal device selects a proper terminal device to assist the first terminal device in positioning.

A third aspect of this application provides a communication apparatus, including:

a transceiver module, configured to: send a first request to a second terminal device, where the first request is used to request the second terminal device to send a first positioning reference signal; the first request includes at least one of the following: first information, second information, third information, fourth information, or fifth information; the first information indicates the communication apparatus to request the second terminal device to send the first positioning reference signal; the second information indicates a time domain feature that needs to be met by the first positioning reference signal; the third information indicates a positioning method used to position the communication apparatus and/or the second terminal device; the fourth information indicates a transmission priority of the first positioning reference signal; and the fifth information indicates a frequency domain feature that needs to be met by the first positioning reference signal; and receive the first positioning reference signal from the second terminal device.

Based on the third aspect, in a possible implementation, the time domain feature includes at least one of the following: the first positioning reference signal is sent at a slot level, a subslot level, or a time domain symbol level; the first positioning reference signal occupies at least one slot or at least one time domain symbol; when the at least one slot includes a plurality of slots, the plurality of slots include a consecutive slot and/or a non-consecutive slot; or when the at least one time domain symbol includes a plurality of time domain symbols, the plurality of time domain symbols include a consecutive time domain symbol and/or a non-consecutive time domain symbol.

Based on the third aspect, in a possible implementation, the frequency domain feature includes at least one of the following: a sending bandwidth of the first positioning reference signal, a resource pool in which the sending bandwidth is located, or a frequency occupied by the first positioning reference signal.

Based on the third aspect, in a possible implementation, the positioning method includes any one of the following: an RTT positioning method, an AOA positioning method, an AOD positioning method, or a TDOA positioning method.

Based on the third aspect, in a possible implementation, when the positioning method is the AOD positioning method, the first request further includes sixth information, and the sixth information indicates an AOD angle positioning mode used for the first positioning reference signal.

Based on the third aspect, in a possible implementation, the third information indicates the AOD angle positioning mode used for the first positioning reference signal, to indicate, by using the AOD angle positioning mode indicated by the third information, that the positioning method is the AOD positioning method.

Based on the third aspect, in a possible implementation, the AOD angle positioning mode used for the first positioning reference signal includes a first mode or a second mode, the first mode includes that the second terminal device sends the first positioning reference signal in a beam switching manner, and the second mode includes that the second terminal device sends the first positioning reference signal in an antenna switching manner.

Based on the third aspect, in a possible implementation, the first information further indicates whether the communication apparatus sends a second positioning reference signal to the second terminal device.

Based on the third aspect, in a possible implementation, the first information is indication information; and when a value of the indication information is a first value, it indicates that the communication apparatus requests the second terminal device to send the first positioning reference signal and the communication apparatus sends the second positioning reference signal to the second terminal device; or when a value of the indication information is a second value, it indicates that the communication apparatus requests the second terminal device to send the first positioning reference signal and the communication apparatus does not send the second positioning reference signal to the second terminal device.

Based on the third aspect, in a possible implementation, the first information is carried in SCI, and at least one of the second information, the third information, the fourth information, and the fifth information is carried in an SL MAC CE.

Based on the third aspect, in a possible implementation, the first request is carried in the SCI or the SL MAC CE.

Based on the third aspect, in a possible implementation, the communication apparatus further includes a processing module. The processing module is further configured to:

obtain a first measurement result, where the first measurement result is obtained by the communication apparatus through measurement based on the first positioning reference signal, where the communication apparatus positions the communication apparatus and/or the second terminal device based on the first measurement result.

Based on the third aspect, in a possible implementation, the transceiver module is further configured to send the second positioning reference signal to the second terminal device.

Based on the third aspect, in a possible implementation, the communication apparatus further includes a processing module. The processing module is further configured to:

obtain a first measurement result, where the first measurement result is obtained by the communication apparatus through measurement based on the first positioning reference signal.

The transceiver module is further configured to:

receive a second measurement result from the second terminal device, where the second measurement result is obtained by the second terminal device through measurement based on the second positioning reference signal.

The processing module is further configured to:

position the communication apparatus and/or the second terminal device based on the first measurement result and the second measurement result.

Based on the third aspect, in a possible implementation, the transceiver module is further configured to:

receive a second request from the second terminal device, where the second request is used to request the communication apparatus to send a third positioning reference signal; and send the third positioning reference signal to the second terminal device.

Based on the third aspect, in a possible implementation, the transceiver module is further configured to:

send a third request to the second terminal device, where the third request is used to request the second terminal device to send a fourth positioning reference signal; and receive the fourth positioning reference signal from the second terminal device.

Based on the third aspect, in a possible implementation, the transceiver module is further configured to:

send a fourth request to the third terminal device, where the fourth request is used to request the third terminal device to send a fifth positioning reference signal; and receive the fifth positioning reference signal from the third terminal device.

Based on the third aspect, in a possible implementation, the transceiver module is further configured to:

receive seventh information from the second terminal device, where the seventh information indicates whether the second terminal device accepts the first request initiated by the communication apparatus to the second terminal device.

A fourth aspect of this application provides a communication apparatus, including:

a transceiver module, configured to: receive a first request from a first terminal device, where the first request is used to request the communication apparatus to send a first positioning reference signal; the first request includes at least one of the following: first information, second information, third information, fourth information, or fifth information; the first information indicates the first terminal device to request the communication apparatus to send the first positioning reference signal; the second information indicates a time domain feature that needs to be met by the first positioning reference signal; the third information indicates a positioning method used to position the first terminal device and/or the communication apparatus; the fourth information indicates a transmission priority of the first positioning reference signal; and the fifth information indicates a frequency domain feature that needs to be met by the first positioning reference signal; and send the first positioning reference signal to the first terminal device based on the first request.

Based on the fourth aspect, in a possible implementation, the time domain feature includes at least one of the following: the first positioning reference signal is sent at a slot level, a subslot level, or a time domain symbol level; the first positioning reference signal occupies at least one slot or at least one time domain symbol; when the at least one slot includes a plurality of slots, the plurality of slots include a consecutive slot and/or a non-consecutive slot; or when the at least one time domain symbol includes a plurality of time domain symbols, the plurality of time domain symbols include a consecutive time domain symbol and/or a non-consecutive time domain symbol.

Based on the fourth aspect, in a possible implementation, the frequency domain feature includes at least one of the following: a sending bandwidth of the first positioning reference signal, a resource pool in which the sending bandwidth is located, or a frequency occupied by the first positioning reference signal.

Based on the fourth aspect, in a possible implementation, the positioning method includes any one of the following: an RTT positioning method, an AOA positioning method, an AOD positioning method, or a TDOA positioning method.

Based on the fourth aspect, in a possible implementation, when the positioning method is the AOD positioning method, the first request further includes sixth information, and the sixth information indicates an AOD angle positioning mode used for the first positioning reference signal.

Based on the fourth aspect, in a possible implementation, the third information indicates the AOD angle positioning mode used for the first positioning reference signal, to indicate, by using the AOD angle positioning mode indicated by the third information, that the positioning method is the AOD positioning method.

Based on the fourth aspect, in a possible implementation, the AOD angle positioning mode used for the first positioning reference signal includes a first mode or a second mode, the first mode includes that the communication apparatus sends the first positioning reference signal in a beam switching manner, and the second mode includes that the communication apparatus sends the first positioning reference signal in an antenna switching manner.

Based on the fourth aspect, in a possible implementation, the first information further indicates whether the first terminal device sends a second positioning reference signal to the communication apparatus.

Based on the fourth aspect, in a possible implementation, the first information is indication information; and when a value of the indication information is a first value, it indicates that the first terminal device requests the communication apparatus to send the first positioning reference signal and the first terminal device sends the second positioning reference signal to the communication apparatus; or when a value of the indication information is a second value, it indicates that the first terminal device requests the communication apparatus to send the first positioning reference signal and the first terminal device does not send the second positioning reference signal to the communication apparatus.

Based on the fourth aspect, in a possible implementation, the first information is carried in SCI, and at least one of the second information, the third information, the fourth information, and the fifth information is carried in an SL MAC CE.

Based on the fourth aspect, in a possible implementation, the first request is carried in the SCI or the SL MAC CE.

Based on the fourth aspect, in a possible implementation, the transceiver module is further configured to: receive the second positioning reference signal from the first terminal device.

Based on the fourth aspect, in a possible implementation, the communication apparatus further includes a processing module.

The processing module is configured to obtain a second measurement result through measurement based on the second positioning reference signal.

The transceiver module is configured to send the second measurement result to the first terminal device.

Based on the fourth aspect, in a possible implementation, the transceiver module is further configured to: send a second request to the first terminal device, where the second request is used to request the first terminal device to send a third positioning reference signal; and receive the third positioning reference signal from the first terminal device.

Based on the fourth aspect, in a possible implementation, the transceiver module is further configured to: receive a third request from the first terminal device, where the third request is used to request the communication apparatus to send a fourth positioning reference signal; and send the fourth positioning reference signal to the first terminal device.

Based on the fourth aspect, in a possible implementation, the transceiver module is further configured to: send seventh information to the first terminal device, where the seventh information indicates whether the communication apparatus accepts the first request initiated by the first terminal device to the communication apparatus.

A fifth aspect of this application provides a communication apparatus. The communication apparatus includes a processor. The processor is configured to invoke a computer program or computer instructions stored in a memory, so that the processor implements any one of the implementations in the first aspect or the second aspect.

Optionally, the communication apparatus further includes a transceiver, and the processor is configured to control the transceiver to perform any one of the implementations in the first aspect or the second aspect.

Optionally, the communication apparatus further includes the memory, and the memory stores the computer program or computer instructions.

Optionally, the processor and the memory are integrated together.

A sixth aspect of embodiments of this application provides a computer program product including computer instructions. When the computer program product runs on a computer, the computer is enabled to perform any one of the implementations in the first aspect or the second aspect.

A seventh aspect of embodiments of this application provides a computer-readable storage medium, including computer instructions. When the computer instructions are run on a computer, the computer is enabled to perform any one of the implementations in the first aspect or the second aspect.

An eighth aspect of embodiments of this application provides a chip apparatus, including a processor, configured to invoke a computer program or computer instructions in a memory, so that the processor performs any one of the implementations in the first aspect or the second aspect.

Optionally, the processor is coupled to the memory through an interface.

According to the foregoing technical solutions, it can be learned that embodiments of this application have the following advantages:

It can be learned from the foregoing technical solutions that the first terminal device sends the first request to the second terminal device. The first request is used to request the second terminal device to send the first positioning reference signal. Then, the first terminal device receives the first positioning reference signal from the second terminal device. It can be learned that the first terminal device may send, to the second terminal device, the first request used to request the second terminal device to send the first positioning reference signal to trigger the second terminal device to send the first positioning reference signal to the first terminal device, thereby implementing sidelink positioning between the first terminal device and the second terminal device. Further, the first request includes at least one of the following: the first information, the second information, the third information, the fourth information, or the fifth information. The first information indicates the first terminal device to request the second terminal device to send the first positioning reference signal. The second information indicates the time domain feature that needs to be met by the first positioning reference signal. The third information indicates the positioning method used to position the first terminal device and/or the second terminal device. The fourth information indicates the transmission priority of the first positioning reference signal. The fifth information indicates the frequency domain feature that needs to be met by the first positioning reference signal. In this way, the second terminal device sends the first positioning reference signal based on the information, so that the first terminal device is supported in performing sidelink positioning, thereby improving the positioning accuracy.

## BRIEF DESCRIPTION OF DRAWINGS

FIG. 1 is a first diagram of a communication system to which an embodiment of this application is applied;
FIG. 2 is a second diagram of a communication system to which an embodiment of this application is applied;
FIG. 3 is a third diagram of a communication system to which an embodiment of this application is applied;
FIG. 4 is a first diagram of protocol stacks of a first terminal device and a second terminal device according to an embodiment of this application;
FIG. 5 is a second diagram of protocol stacks of a first terminal device and a second terminal device according to an embodiment of this application;
FIG. 6 is a third diagram of protocol stacks of a first terminal device and a second terminal device according to an embodiment of this application;
FIG. 7 is a diagram of a first embodiment of a communication method according to an embodiment of this application;
FIG. 8 is a diagram of a second embodiment of a communication method according to an embodiment of this application;
FIG. 9 is a diagram of a third embodiment of a communication method according to an embodiment of this application;
FIG. 10 is a diagram of a fourth embodiment of a communication method according to an embodiment of this application;
FIG. 11 is a diagram of a fifth embodiment of a communication method according to an embodiment of this application;
FIG. 12 is a diagram of a first structure of a communication apparatus according to an embodiment of this application;
FIG. 13 is a diagram of a second structure of a communication apparatus according to an embodiment of this application;
FIG. 14 is a diagram of a structure of a terminal device according to an embodiment of this application; and
FIG. 15 is a diagram of a third structure of a communication apparatus according to an embodiment of this application;

## DESCRIPTION OF EMBODIMENTS

Embodiments of this application provide a communication method and a related apparatus, so that a first terminal device sends, to a second terminal device, a first request used to request the second terminal device to send a first positioning reference signal to trigger the second terminal device to send the first positioning reference signal to the first terminal device based on the first request. This facilitates positioning of a sidelink between the first terminal device and the second terminal device.

The following clearly and completely describes the technical solutions in embodiments of this application with reference to the accompanying drawings in embodiments of this application. Apparently, the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may represent a, b, c, a and b, a and c, b and c, or a, b, and c. a, b, and c may be singular or plural.

The technical solutions in embodiments of this application may be applied to a sidelink communication system, for example, an internet of things system. Specifically, the system may be an internet of vehicles system, an industrial internet of things system, a smart home system, or the like, for example, a public safety (public safety) system, a smart city system, a transportation security system, an industrial control system, an unmanned driving system, or an industrial robot system.

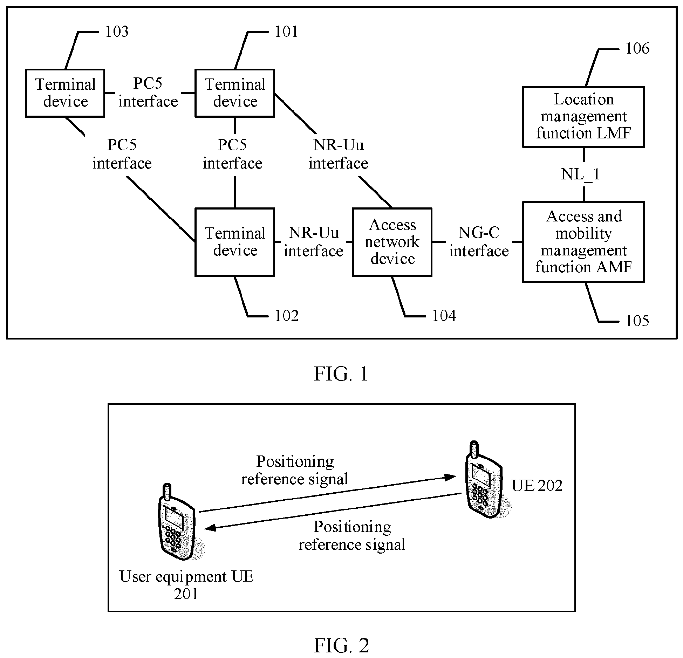

FIG. 1 is a first diagram of a communication system to which an embodiment of this application is applied. Refer to FIG. 1. The communication system includes a terminal device 101, a terminal device 102, a terminal device 103, an access network device 104, an access and mobility management function (access and mobility management function, AMF) 105, and a location management function (location management function, LMF) 106.

Optionally, the terminal device 101, the terminal device 102, and the terminal device 103 may be connected through an interface. The access network device 104 and the AMF 105 may be connected through an interface. The AMF 105 and the LMF 106 may be connected through an interface.

For example, the terminal device 101 and the terminal device 102 may be connected through a PC5 interface. The terminal device 101 and the terminal device 103 may be connected through a PC5 interface. The terminal device 101 and the terminal device 103 may be connected through a PC5 interface. The terminal device 101 and the terminal device 102 are separately connected to the access network device 104 through an NR-Uu interface. The access network device 104 and the AMF 105 are connected through an NG-C interface. The AMF 105 and the LMF 106 are connected through an NL1 interface. The NR-Uu interface is a communication interface between a terminal device and an access network device. The NG-C interface is a control plane interface between an access network and a core network. The NL1 interface is a communication interface between an AMF and an LMF.

FIG. 1 shows only an example in which the communication system includes the terminal device 101, the terminal device 102, the terminal device 103, and the access network device 104. However, during actual application, the communication system may include at least two terminal devices and at least one access network device. This is not specifically limited in this application.

The following describes some devices and network elements in this application.

A terminal device may be a wireless terminal device that can receive scheduling and indication information of an access network device. The wireless terminal device may be a device providing voice and/or data connectivity for a user, a handheld device having a wireless connection function, or another processing device connected to a wireless modem.

The terminal device is also referred to as user equipment (user equipment, UE), a mobile station (mobile station, MS), a mobile terminal (mobile terminal, MT), a roadside unit (roadside unit, RSU), or a positioning reference unit (positioning reference unit, PRU). The RSU is a roadside unit deployed on a roadside, supports sidelink communication and positioning-related protocols, and can provide a wireless communication function for the user equipment. The RSU may be a roadside station, an access point, a sidelink device, or the like in various forms. The PRU may be a terminal device deployed at a fixed location, and is configured to correct a network error. The terminal device is a device that includes a wireless communication function (providing voice/data connectivity for a user), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire-vehicle device, or a vehicle-mounted module, or a vehicle. The wireless terminal in the industrial control may be a robot or the like.

The access network device 104 is an apparatus that is deployed in a radio access network and that provides a wireless communication function for a terminal device. The access network device may be a radio access network (radio access network RAN) node that enables the terminal device to access a wireless network.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a network device in a 5th (5th generation, 5G) mobile communication system, for example, a next generation NodeB (next generation NodeB, gNB), a transmission reception point (transmission reception point, TRP), or a transmission point (transmission point, TP) in a new radio (new radio, NR) system, or one or a group of (including a plurality of antenna panels) antenna panels of a base station in the 5G mobile communication system. Alternatively, the access network device may be a network node forming a gNB or a transmission point, for example, a baseband unit (baseband unit, BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB.

For example, the CU is responsible for processing a non-real-time protocol and service, and implements functions of a radio resource control (radio resource control, RRC) protocol layer and a packet data convergence protocol (packet data convergence protocol, PDCP) layer. The DU is responsible for processing a physical layer protocol and a real-time service, and implements functions of a radio link control (radio link control, RLC) protocol layer, a media access control (media access control, MAC) protocol layer, and a physical (physical, PHY) protocol layer. The AAU implements some physical layer processing functions, radio frequency processing, and a function related to an active antenna. Information at the RRC protocol layer is finally changed into information at the PHY protocol layer, or is converted from information at the PHY protocol layer. Therefore, in this architecture, higher layer signaling (for example, RRC protocol layer signaling) may also be considered as being sent by the DU, or sent by the DU and the AAU.

It may be understood that the access network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

The AMF is responsible for access control, registration management, service management, mobility management, and the like for the terminal device to access a network.

The LMF is configured to perform positioning calculation and management on a location of the terminal device.

In this application, a name of the AMF may change with evolution of a communication system. In a current communication system or a future communication system, a functional network element that has another name and that has a function similar to that of the AMF may be understood as the AMF in this application, and is applicable to the method provided in embodiments of this application.

In this application, the LMF is a name in the current communication system. In the future communication system, a name of the LMF may change with the evolution of the communication system. Therefore, the LMF is referred to as the location management device hereinafter to describe the technical solutions in this application. The location management device is configured to perform positioning calculation on the location of the terminal device. In the current communication system or the future communication system, a functional network element that has another name and that has a function similar to that of the location management device may be understood as the location management device in this application, and is applicable to the method provided in this application.

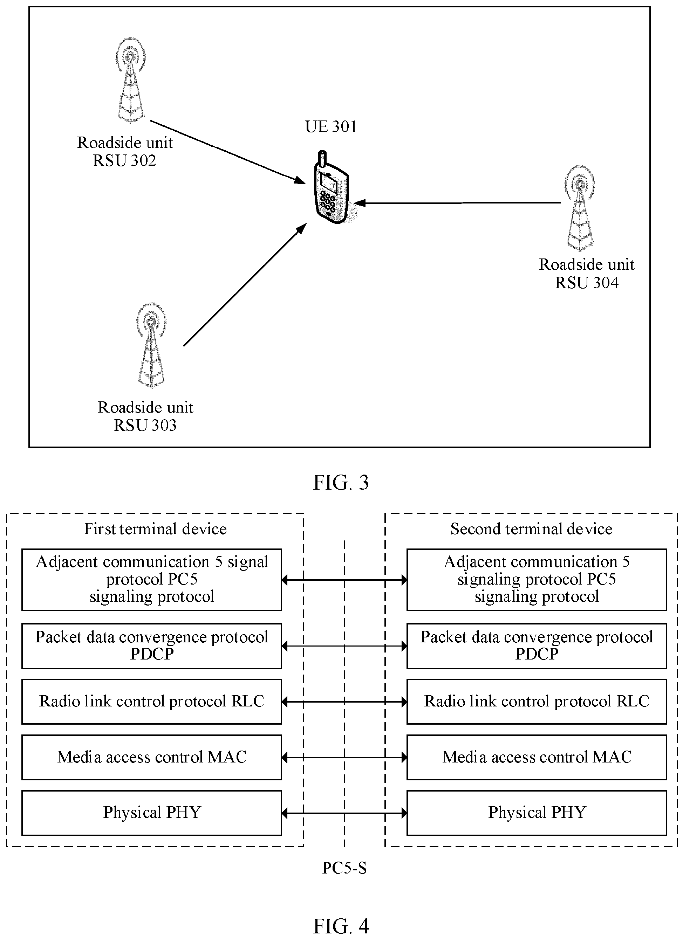

The following describes, with reference to FIG. 2 and FIG. 3, two application scenarios of the method provided in this application.

FIG. 2 is a second diagram of a communication system to which an embodiment of this application is applied. Refer to FIG. 2. The communication system includes UE 201 and UE 202. The UE 201 and the UE 202 communicate with each other through a PC5 interface. The UE 201 may position the UE 201 and/or the UE 202 by using the technical solutions in this application.

FIG. 3 is a third diagram of a communication system to which an embodiment of this application is applied. Refer to FIG. 3. The communication system includes UE 301, a roadside unit RSU 302, an RSU 303, and an RSU 304. As shown in FIG. 3, the UE 301 and the RSU communicate with each other through a PC5 interface. The UE 301 may be positioned between the UE 301 and the RSU by using the technical solutions in this application.

It should be noted that, in the communication system shown in FIG. 3, a form of the RSU is merely an example, and does not specifically constitute any limitation to the RSU in this application.

The communication system to which the technical solutions provided in this application are applicable includes a first terminal device and a second terminal device. The first terminal device and the second terminal device may communicate with each other by using a sidelink.

The following describes protocol stack structures of the first terminal device and the second terminal device with reference to FIG. 4 to FIG. 6.

FIG. 4 is a first diagram of protocol stacks of a first terminal device and a second terminal device according to an embodiment of this application. Refer to FIG. 4. The first terminal device and the second terminal device each have the following protocol layers:

a PHY protocol layer: mainly used to define multiple access, a physical layer channel and modulation, channel coding, a physical layer procedure (for example, cell search, power control, synchronization, random access, hybrid automatic repeat request (hybrid automatic repeat request, HARQ), beam management and channel state information (channel state information, CSI) reporting, and shared spectrum channel access), physical layer measurement, and the like;

a MAC protocol layer, used for mapping between a logical channel and a transmission channel, multiplexing of one or more MAC data packets on the logical channel, scheduling information reporting, HARQ error correction, priority processing between different terminal devices during dynamic scheduling, priority processing between different logical channels of a same terminal device, padding, and the like;

an RLC protocol layer, used for upper-layer data transmission, data packet sequence numbering, automatic repeat request (automatic repeat request, ARQ) error correction, RLC data segmentation and assembly, redundancy detection, data packet discarding, RLC re-establishment, and protocol error detection;

a PDCP layer, used for upper-layer data transmission, PDCP sequence number maintenance, data packet header compression, uplink PDCP packet compression and decompression, encryption and decryption, integrity protection and check, timer-based data discarding, routing in separate bearers, PDCP repetition, reordering and sequential delivery, out-of-order delivery, and repeated discarding; and

an adjacent communication 5 signaling protocol (PC5 signaling protocol, PC5-S) layer, used to transmit PC5-S signaling between the first terminal device and the second terminal device.

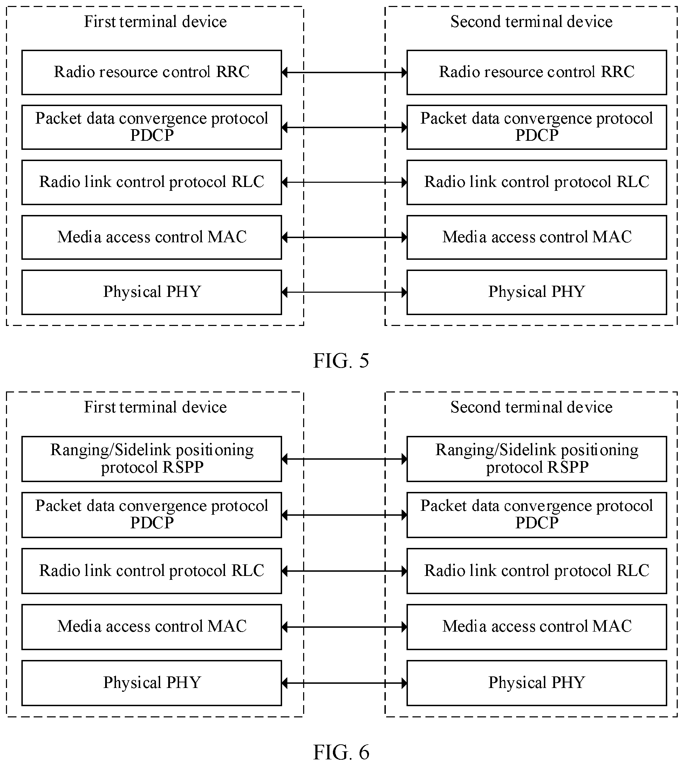

FIG. 5 is a second diagram of protocol stacks of a first terminal device and a second terminal device according to an embodiment of this application. Refer to FIG. 5. The first terminal device and the second terminal device each have the following protocol layers: a PHY protocol layer, a MAC protocol layer, an RLC protocol layer, a PDCP layer, and an RRC protocol layer.

For the PHY protocol layer, the MAC protocol layer, the RLC protocol layer, and the PDCP layer, refer to the foregoing related descriptions. The RRC protocol layer is used to transmit a PC5 RRC message between the first terminal device and the second terminal device.

FIG. 6 is a third structural diagram of protocol stacks of a first terminal device and a second terminal device according to an embodiment of this application. Refer to FIG. 6. The first terminal device and the second terminal device each have the following protocol layers: a PHY protocol layer, a MAC protocol layer, an RLC protocol layer, a PDCP layer, and a ranging/sidelink positioning protocol (ranging/sidelink positioning protocol, RSPP) layer.

For the PHY protocol layer, the MAC protocol layer, the RLC protocol layer, and the PDCP layer, refer to the foregoing related descriptions. The RSPP layer is used to control a positioning service procedure between terminal devices, for example, request and provide auxiliary data, request and provide a positioning capability, and request and provide location information.

It should be noted that the PC5-S protocol layer shown in FIG. 4 is a protocol layer above a PDCP layer. The RRC protocol layer shown in FIG. 5 is a protocol layer above the PDCP layer. The RSPP layer shown in FIG. 6 is a protocol layer above the PDCP layer. Above the PDCP layer of the terminal device, a protocol stack of the terminal device may include at least one of a PCS-5 protocol layer, an RRC protocol layer, and a PDCP layer. The terminal device may select a proper protocol layer based on an actual requirement to transmit corresponding signaling and data.

The technical solutions in this application are described below with reference to specific embodiments.

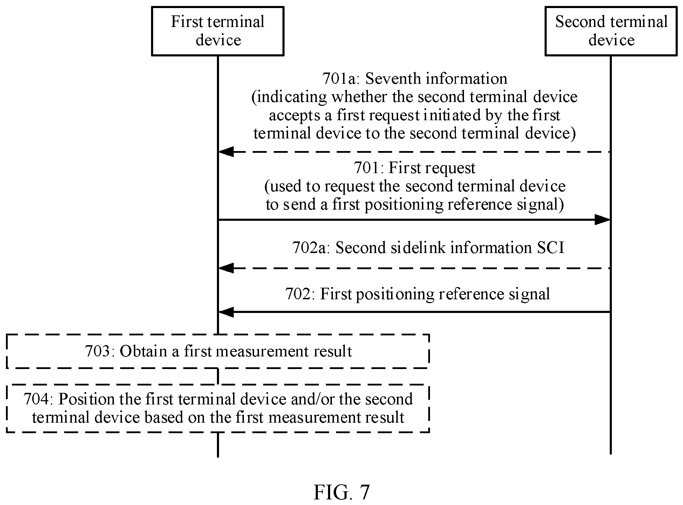

FIG. 7 is a diagram of a first embodiment of a communication method according to an embodiment of this application. Refer to FIG. 7. The method includes the following steps.

701: A first terminal device sends a first request to a second terminal device. The first request is used to request the second terminal device to send a first positioning reference signal. Correspondingly, the second terminal device receives the first request from the first terminal device.

The first request includes at least one of the following: first information, second information, third information, fourth information, or fifth information. The first information indicates the first terminal device to request the second terminal device to send the first positioning reference signal. The second information indicates a time domain feature that needs to be met by the first positioning reference signal. The third information indicates a positioning method used to position the first terminal device and/or the second terminal device. The fourth information indicates a transmission priority of the first positioning reference signal. The fifth information indicates a frequency domain feature that needs to be met by the first positioning reference signal.

The following describes information included in the first request.

1. The first information indicates the first terminal device to request the second terminal device to send the first positioning reference signal. For example, the first information is indication information, and the indication information includes one bit. Specifically, as shown in Table 1, when a value of the indication information is 1, it indicates that the first terminal device requests the second terminal device to send the first positioning reference signal.

Table 1

| Value of the indication information | Whether to request the second terminal device to send the first positioning reference signal |
|---|---|
| 0 | No |
| 1 | Yes |

It should be noted that if the first terminal device does not request the second terminal device to send the first positioning reference signal, the first terminal device sends, to the second terminal device, indication information indicating that the second terminal device is not requested to send the first positioning reference signal. For example, when the value of the indication information is 0, it indicates that the first terminal device does not request the second terminal device to send the first positioning reference signal.

It should be noted that Table 1 is merely an example. During actual application, various values of the indication information and meanings of corresponding indications may also be other implementations. This is not specifically limited in this application. For example, when the value of the indication information is 0, it indicates that the first terminal device requests the second terminal device to send the first positioning reference signal. When the value of the indication information is 1, it indicates that the first terminal device does not request the second terminal device to send the first positioning reference signal.

Optionally, the first information further indicates whether the first terminal device sends a second positioning reference signal to the second terminal device. In this implementation, the first terminal device may indicate, by using the first information, the first terminal device to request the second terminal device to send the first positioning reference signal, and indicate whether the first terminal device sends the second positioning reference signal to the second terminal device.

Optionally, the first information is indication information. When the value of the indication information is a first value, it indicates that the first terminal device requests the second terminal device to send the first positioning reference signal and the first terminal device sends the second positioning reference signal to the second terminal device; or when the value of the indication information is a second value, it indicates that the first terminal device requests the second terminal device to send the first positioning reference signal and the first terminal device does not send the second positioning reference signal to the second terminal device.

For example, the first information is indication information, the indication information includes a plurality of bits, and the plurality of bits jointly indicate that the first terminal device requests the second terminal device to send the first positioning reference signal and whether the first terminal device sends the second positioning reference signal to the second terminal device. As shown in Table 2, when the value of the indication information is 10, it indicates that the first terminal device sends the second positioning reference signal to the second terminal device and the first terminal device requests the second terminal device to send the first positioning reference signal. When the value of the indication information is 11, it indicates that the first terminal device does not send the second positioning reference signal to the second terminal device and indicates that the first terminal device requests the second terminal device to send the first positioning reference signal.

Table 2

| Value of the indication information | Whether the first terminal device sends the second positioning reference signal to the second terminal device | Whether to request the second terminal device to send the first positioning reference signal |
| --- | --- | --- |
| 00 | No | No |
| 01 | Yes | No |
| 10 | Yes | Yes |
| 11 | No | Yes |

It should be noted that if the first terminal device does not request the second terminal device to send the first positioning reference signal, the first terminal device may send indication information to the second terminal device. The indication information indicates that the second terminal device is not requested to send the first positioning reference signal and indicates whether the first terminal device sends the second positioning reference signal to the second terminal device. For example, when the value of the indication information is 00, it indicates that the first terminal device does not request the second terminal device to send the first positioning reference signal and the first terminal device does not send the second positioning reference signal to the second terminal device. When the value of the indication information is 01, it indicates that the first terminal device does not request the second terminal device to send the first positioning reference signal and the first terminal device sends the second positioning reference signal to the second terminal device.

It should be noted that the values and the corresponding meanings of the indication information shown in Table 2 are merely examples. During actual application, values and corresponding meanings of the indication information may also be in other implementation forms. This is not specifically limited in this application. For example, refer to Table 3.

Table 3

| Value of the indication information | Whether the first terminal device sends the second positioning reference signal to the second terminal device | Whether to request the second terminal device to send the first positioning reference signal |
| --- | --- | --- |
| 10 | No | No |
| 11 | Yes | No |

(continued)

| Value of the indication information | Whether the first terminal device sends the second positioning reference signal to the second terminal device | Whether to request the second terminal device to send the first positioning reference signal |
|---|---|---|
| 00 | Yes | Yes |
| 01 | No | Yes |

It should be noted that optionally, Table 2 or Table 3 may be preconfigured in the first terminal device and the second terminal device before delivery, or may be configured by a network device for the first terminal device and the second terminal device. In this way, the second terminal device determines the meaning indicated by the first information.

Optionally, the first information indicates the first terminal device to send the second positioning reference signal to the second terminal device and indicates that the first terminal device requests the second terminal device to send the first positioning reference signal. The first information further indicates a configuration of the second positioning reference signal.

For example, the first information is indication information. When the value of the indication information is 10, it indicates that the first terminal device sends the second positioning reference signal to the second terminal device and the first terminal device requests the second terminal device to send the first positioning reference signal. In addition, the configuration of the second positioning reference signal is an SL PRS#2.

Table 4

| Value of the indication information | Whether the first terminal device sends the second positioning reference signal to the second terminal device | Whether to request the second terminal device to send the first positioning reference signal |
|---|---|---|
| 00 | No | No |
| 01 | SL PRS#1 | No |
| 10 | SL PRS#2 | Yes |
| 11 | No | Yes |

It should be noted that if the first terminal device does not request the second terminal device to send the first positioning reference signal, the first terminal device may send indication information to the second terminal device. The indication information indicates that the second terminal device is not requested to send the first positioning reference signal and indicates whether the first terminal device sends the second positioning reference signal to the second terminal device. When the indication information indicates the first terminal device to send the second positioning reference signal to the second terminal device, the indication information further indicates the configuration of the second positioning reference signal. For example, as shown in Table 4, when the value of the indication information is 01, it indicates that the first terminal device sends the second positioning reference signal to the second terminal device and indicates that the first terminal device does not request the second terminal device to send the first positioning reference signal. In addition, the configuration of the second positioning reference signal is an SL PRS#1.

It should be noted that optionally, Table 4 may be preconfigured in the first terminal device and the second terminal device before delivery, or may be configured by a network device for the first terminal device and the second terminal device. In this way, the second terminal device determines the meaning indicated by the first information. The positioning reference signals configured as the SL PRS#1 and the SL PRS#2 may also be preconfigured in the first terminal device and the second terminal device. In this way, the second terminal device determines the configuration used for the second positioning reference signal. This helps the second terminal device receive the second positioning reference signal.

2. The second information indicates the time domain feature that needs to be met by the first positioning reference signal.

Optionally, the time domain feature includes at least one of the following: the first positioning reference signal is sent at a slot (slot) level, a subslot (subslot) level, or a time domain symbol level; and the first positioning reference signal occupies at least one slot or at least one time domain symbol. When the at least one slot includes a plurality of slots, the plurality of slots include a consecutive slot and/or a non-consecutive slot. When the at least one time domain symbol includes a plurality of time domain symbols, the plurality of time domain symbols include a consecutive time domain symbol and/or a non-consecutive time domain symbol.

Specifically, the first terminal device may request the first positioning reference signal sent by the second terminal device to occupy an entire slot or occupy only some time domain symbols in one slot. The first terminal device may request the first positioning reference signal to occupy a plurality of slots or a plurality of time domain symbols. In this way, the second terminal device sends the first positioning reference signal for a plurality of times. Therefore, the first terminal device is supported in correspondingly positioning the first terminal device and/or the second terminal device, thereby improving positioning accuracy. For example, the first terminal device uses an AOA positioning method or an AOD positioning method, and the first terminal device needs to receive the first positioning reference signal sent by the second terminal device for a plurality of times, so that the first terminal device obtains, through measurement, an angle of arrival, an angle of departure, or the like of the first positioning reference signal, thereby facilitating positioning of the first terminal device and/or the second terminal device.

It should be noted that, in this application, a slot may be understood as a physical slot or a logical slot used for a sidelink. The physical slot is a slot that is numbered in a sequence defined by an NR air interface, and the logical slot is a slot that is renumbered in a sequence and that is included in an SL resource pool and that can be used for SL sending. For example, if the SL resource pool includes physical slots 1, 3, 5, 7, and 9 that can be used for SL sending, logical slots 0, 1, 2, 3, and 4 respectively correspond to the physical slots 1, 3, 5, 7, and 9. In other words, the physical slots 1, 3, and 5 are consecutive logical slots.

3. The third information indicates the positioning method used to position the first terminal device and/or the second terminal device.

The positioning method includes any one of the following: an RTT positioning method, an AOA positioning method, an AOD positioning method, or a TDOA positioning method.

In a possible implementation, when the positioning method is the AOD positioning method, the first request further includes sixth information, and the sixth information indicates an AOD angle positioning mode used for the first positioning reference signal.

The AOD angle positioning mode includes a first mode or a second mode. The first mode includes that the second terminal device sends the first positioning reference signal in a beam switching manner. The second mode includes that the second terminal device sends the first positioning reference signal in an antenna switching manner.

In this implementation, when the first terminal device performs positioning by using the AOD positioning method, a mode used by the second terminal device to send the first positioning reference signal affects a measurement manner of the first terminal device. For example, if the second terminal device sends the first positioning reference signal in the first mode, the first terminal device needs to measure a receive power difference between positioning reference signals on different transmit beams from the second terminal device. If the second terminal device sends the first positioning reference signal in the second mode, the first terminal device needs to measure a phase difference between positioning reference signals on different transmit antennas from the second terminal device. Therefore, the first terminal device may send the sixth information to the second terminal device to indicate, to the second terminal device, the AOD angle positioning mode used for the first positioning reference signal, so that the first terminal device performs AOD positioning.

In another possible implementation, the third information indicates the AOD angle positioning mode used for the first positioning reference signal, to indicate, by using the AOD angle positioning mode indicated by the third information, that the positioning method is the AOD positioning method.

In this implementation, the first terminal device indicates, by using the third information, the AOD angle positioning mode used for the first positioning reference signal, to indirectly indicate that the positioning method used by the first terminal device is the AOD positioning method. For the AOD angle positioning mode, refer to the foregoing related descriptions. Details are not described herein again.

4. The fourth information indicates a transmission priority of the first positioning reference signal.

Specifically, the first terminal device may indicate, by using the fourth information, the transmission priority that the first terminal device expects of the first positioning reference signal. In this way, when the second terminal device receives positioning reference signal transmission requests of a plurality of terminal devices, if a capability and a resource of the second terminal device are limited, the second terminal device may preferentially send a positioning reference signal with a higher transmission priority.

Optionally, the first terminal device may determine the transmission priority of the first positioning reference signal with reference to a service requirement of the first terminal device and a service emergency degree.

5. The fifth information indicates the frequency domain feature that needs to be met by the first positioning reference signal.

Optionally, the frequency domain feature includes at least one of the following: a sending bandwidth of the first positioning reference signal, a resource pool in which the sending bandwidth is located, or a frequency occupied by the first positioning reference signal.

For example, the first terminal device expects to implement high-accuracy positioning, and the second terminal device may support transmission of a large-bandwidth positioning reference signal. In this case, the first terminal device may request, by using the fifth information, the second terminal device to send a large-bandwidth positioning reference signal.

In a possible implementation, the first information is carried in first SCI, and at least one of the second information, the third information, the fourth information, and the fifth information is carried in an SL MAC CE.

The first SCI may be first-level SCI or second-level SCI sent by the first terminal device. This is not specifically limited in this application. Optionally, if the first request further includes the sixth information, the sixth information may be carried in the SL MAC CE. For the sixth information, refer to the foregoing related descriptions.

In another possible implementation, the first request is carried in the first SCI or the SL MAC CE. In this implementation, all content included in the first request is included in the first SCI or the SL MAC CE.

The foregoing shows that all the content included in the first request may be carried in the first SCI and/or the SL MAC CE, thereby helping the first terminal device efficiently request the second terminal device to send the first positioning reference signal. In this way, a processing delay is reduced and positioning efficiency is improved. Further, the first request further includes related information such as the time domain feature and the frequency domain feature that need to be met by the first positioning reference signal, and the transmission priority. In this way, the second terminal device sends the first positioning reference signal based on the information, so that the first terminal device is supported in performing sidelink positioning, thereby improving the positioning accuracy.

Optionally, the first terminal device may send the first request to the second terminal device by using a PHY protocol layer or a MAC protocol layer.

Optionally, the embodiment shown in FIG. 7 further includes step 701a. Step 701a may be performed before step 701.

701a: The second terminal device sends seventh information to the first terminal device. The seventh information indicates whether the second terminal device accepts the first request initiated by the first terminal device to the second terminal device. Correspondingly, the first terminal device receives the sixth information from the second terminal device.

Optionally, the seventh information may be considered as a capability of the second terminal device, and indicates whether the second terminal device accepts the first request and sends the first positioning reference signal to the first terminal device.

Optionally, the second terminal device may send the seventh information to the first terminal device by using a PC5-S protocol layer, an RRC protocol layer, or an RSPP layer.

In this embodiment, an example in which the seventh information indicates the second terminal device to accept the first request initiated by the first terminal device to the second terminal device is used to describe the technical solution in this application.

702: The second terminal device sends the first positioning reference signal to the first terminal device based on the first request. Correspondingly, the first terminal device receives the first positioning reference signal from the second terminal device.

Specifically, the second terminal device may determine, based on the first request, a configuration used to send the first positioning reference signal. The configuration of the first positioning reference signal may meet a requirement that is shown in the first request and that needs to be met by the first positioning reference signal. Alternatively, the second terminal device may determine, with reference to the first request, a configuration used to send the first positioning reference signal. In other words, when determining the configuration of the first positioning reference signal, the second terminal device may consider a requirement that is shown in the first request and that needs to be met by the first positioning reference signal. The configuration of the second positioning reference signal may be inconsistent with the requirement that is shown in the first request and that needs to be met by the first positioning reference signal. For example, the first positioning reference signal may occupy a relatively small quantity of time-frequency resources, and does not necessarily occupy a plurality of slots. Alternatively, when an available bandwidth is limited, the sending bandwidth occupied by the first positioning reference signal may be relatively small, and is not consistent with the sending bandwidth of the first positioning reference signal requested in the first request. Then, the second terminal device sends the first positioning reference signal to the first terminal device based on the configuration of the first positioning reference signal.

In a possible implementation, the configuration of the first positioning reference signal may be preconfigured. The first terminal device may receive the first positioning reference signal on a corresponding time-frequency resource by using the configuration of the first positioning reference signal.

In another possible implementation, optionally, the embodiment shown in FIG. 7 further includes step 702a. Step 702a may be performed before step 702 and after step 701.

702a: The second terminal device sends second SCI to the first terminal device. Correspondingly, the first terminal device receives the second SCI from the second terminal device.

The second SCI indicates the configuration of the first positioning reference signal to be sent by the second terminal device. For example, a plurality of positioning reference signal configurations are preconfigured in the first terminal device and the second terminal device, and each positioning reference signal configuration has a corresponding index. The second SCI carries an index of the configuration of the first positioning reference signal. The first terminal device may determine the configuration of the first positioning reference signal by using the index. The first terminal device may receive the first positioning reference signal on a corresponding time-frequency resource by using the configuration of the first positioning reference signal.

Optionally, the embodiment shown in FIG. 7 further includes step 703 and step 704. Step 703 and step 704 may be performed after step 702.

703: The first terminal device obtains a first measurement result.

The first measurement result is obtained by the first terminal device through measurement based on the first positioning reference signal.

For example, the first terminal device uses an AOA positioning method. The first terminal device may measure the first positioning reference signal to obtain an angle of arrival at which the first positioning reference signal arrives at the first terminal device. That is, the first measurement result includes the angle of arrival at which the first positioning reference signal arrives at the first terminal device.

For example, the first terminal device uses an AOD positioning method. The first terminal device may measure the first positioning reference signal to obtain an angle of departure at which the first positioning reference signal leaves the second terminal device. That is, the first measurement result includes the angle of departure at which the first positioning reference signal leaves the second terminal device.

704: The first terminal device positions the first terminal device and/or the second terminal device based on the first measurement result.

Optionally, the first terminal device may determine, based on the first measurement result, at least one of the following: relative locations of the first terminal device and the second terminal device, an absolute location of the first terminal device, an absolute location of the second terminal device, or a distance between the first terminal device and the second terminal device.

In this embodiment of this application, the first terminal device sends the first request to the second terminal device. The first request is used to request the second terminal device to send the first positioning reference signal. Then, the first terminal device receives the first positioning reference signal from the second terminal device. It can be learned that the first terminal device may send, to the second terminal device, the first request used to request the second terminal device to send the first positioning reference signal to trigger the second terminal device to send the first positioning reference signal to the first terminal device, thereby implementing sidelink positioning between the first terminal device and the second terminal device. Further, the first request includes at least one of the following: the first information, the second information, the third information, the fourth information, or the fifth information. The first information indicates the first terminal device to request the second terminal device to send the first positioning reference signal. The second information indicates a time domain feature that needs to be met by the first positioning reference signal. The third information indicates a positioning method used to position the first terminal device and/or the second terminal device. The fourth information indicates the transmission priority of the first positioning reference signal. The fifth information indicates a frequency domain feature that needs to be met by the first positioning reference signal. In this way, the second terminal device sends the first positioning reference signal based on the information, so that the first terminal device is supported in performing sidelink positioning, thereby improving the positioning accuracy.

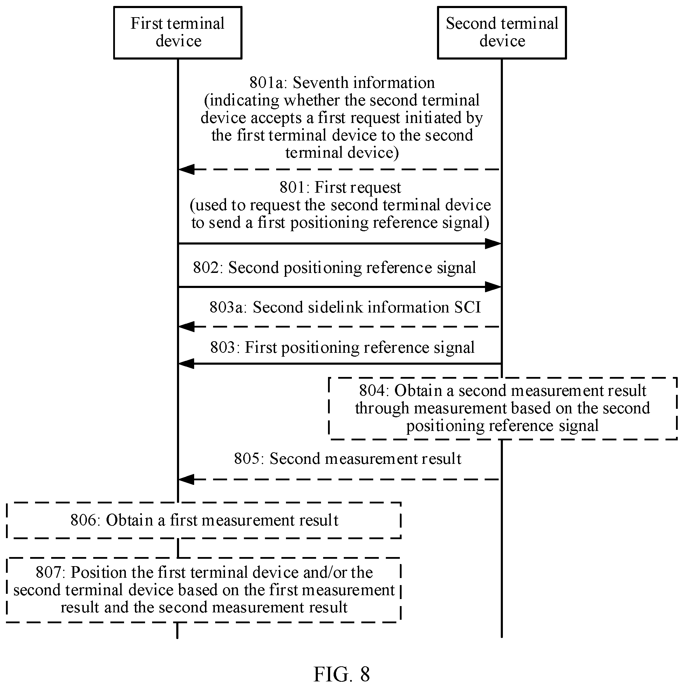

The following describes some specific implementation solutions of this application with reference to the embodiments shown in FIG. 8 to FIG. 11.

FIG. 8 is a diagram of a second embodiment of a communication method according to an embodiment of this application. Refer to FIG. 8. The method includes the following steps.

801: A first terminal device sends a first request to a second terminal device. The first request is used to request the second terminal device to send a first positioning reference signal. Correspondingly, the second terminal device receives the first request from the first terminal device.

Step 801 is similar to step 701 in the embodiment shown in FIG. 7. For details, refer to the related descriptions of step 701 in the embodiment shown in FIG. 7. Details are not described herein again.

802: The first terminal device sends a second positioning reference signal to the second terminal device. Correspondingly, the second terminal device receives the second positioning reference signal from the first terminal device.

Optionally, before step 802, the first terminal device may send first SCI to the second terminal device. The first SCI is used to schedule the first terminal device to send the second positioning reference signal to the second terminal device. As described in step 701 in the embodiment shown in FIG. 7, some or all information included in the first request may be carried in the first SCI. Optionally, the first SCI further indicates a configuration of the second positioning reference signal to help the second terminal device receive the second positioning reference signal.

It should be noted that there is no fixed execution sequence between step 801 and step 802. Step 801 may be performed before step 802, or step 802 is performed before step 801, or step 801 and step 802 are simultaneously performed based on a situation. This is not specifically limited in this application.

803: The second terminal device sends the first positioning reference signal to the first terminal device. Correspondingly, the first terminal device receives the first positioning reference signal from the second terminal device.

Step 803 is similar to step 702 in the embodiment shown in FIG. 7. For details, refer to the related descriptions of step 702 in the embodiment shown in FIG. 7. Details are not described herein again.

Optionally, the embodiment shown in FIG. 8 further includes step 803a. Step 803a may be performed before step 803 and after step 801.

803a: The second terminal device sends second SCI to the first terminal device. Correspondingly, the first terminal device receives the second SCI from the second terminal device.

Step 803a is similar to step 702a in the embodiment shown in FIG. 7. For details, refer to the related descriptions of step 702a in the embodiment shown in FIG. 7. Details are not described herein again.

Optionally, the embodiment shown in FIG. 8 further includes step 804 to step 807. Step 804 to step 807 may be performed after step 803.

804: The second terminal device obtains a second measurement result through measurement based on the second positioning reference signal.

For example, the second terminal device determines a receive-transmit time difference Rx1 - Tx1 between a receive time Rx1 at which the second terminal device receives the second positioning reference signal and a transmit time Tx1 at which the second terminal device sends the first positioning reference signal. That is, the second measurement result includes the receive-transmit time difference Rx1 - Tx1.

805: The second terminal device sends the second measurement result to the first terminal device. Correspondingly, the first terminal device receives the second measurement result from the second terminal device.

Optionally, the second terminal device may send the second measurement result to the first terminal device through an RSPP layer. Correspondingly, the first terminal device receives the second measurement result sent by the second terminal device through the RSPP layer.

Optionally, the second SCI is further used to schedule a PSSCH of the second terminal device, and the second measurement result may be carried on the PSSCH of the second terminal device.

806: The first terminal device obtains a first measurement result.

For example, the first terminal device determines a receive-transmit time difference Rx2 - Tx2 between a receive time Rx2 at which the first terminal device receives the first positioning reference signal and a transmit time Tx2 at which the first terminal device sends the second positioning reference signal. That is, the first measurement result includes the receive-transmit time difference Rx2 - Tx2.

807: The first terminal device positions the first terminal device and/or the second terminal device based on the first measurement result and the second measurement result.

For example, the first measurement result includes the receive-transmit time difference Rx2 - Tx2, and the second measurement result includes the receive-transmit time difference Rx1 - Tx1. The first terminal device determines a round trip time RTT between the first terminal device and the second terminal device based on the first measurement result and the second measurement result. That is, round trip time RTT = Rx2 - Tx2 + Rx1 - Tx1. Therefore, the first terminal device may determine that the distance between the first terminal device and the second terminal device is obtained by dividing the round trip time by 2. Optionally, the first terminal device may further determine an angle, a phase location, and the like of the first terminal device relative to the second terminal device with reference to other measurement quantities of the first positioning reference signal and the second positioning reference signal.

In the embodiment shown in FIG. 8, the first terminal device sends the first request to the second terminal device. The first request is used to request the second terminal device to send the first positioning reference signal. Then, the first terminal device sends the second positioning reference signal to the second terminal device. Next, the second terminal device sends the first positioning reference signal to the first terminal device. In this way, the second terminal device determines the receive-transmit time difference Rx1 - Tx1 between the receive time Rx1 at which the second terminal device receives the second positioning reference signal and the transmit time Tx1 at which the second terminal device sends the first positioning reference signal. The second terminal device sends the receive-transmit time difference Rx1 - Tx1 to the first terminal device. In this way, the first terminal device may position the first terminal device and/or the second terminal device by using the round trip time with reference to the receive/transmit time difference Rx1 - Tx1.

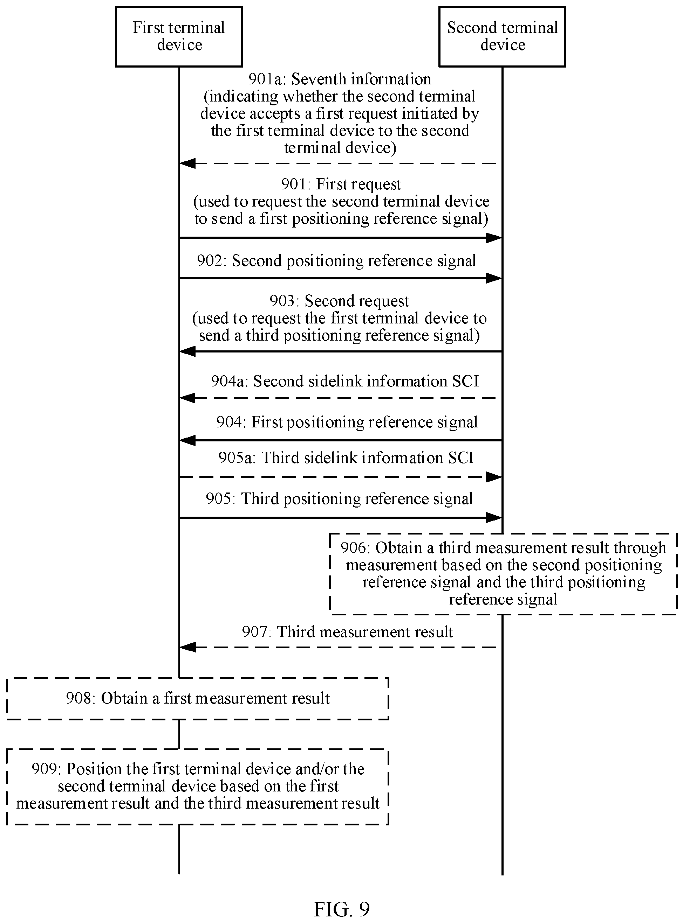

FIG. 9 is a diagram of a third embodiment of a communication method according to an embodiment of this application. Refer to FIG. 9. The method includes the following steps.

901: A first terminal device sends a first request to a second terminal device. The first request is used to request the second terminal device to send a first positioning reference signal. Correspondingly, the second terminal device receives the first request from the first terminal device.

Step 901 is similar to step 701 in the embodiment shown in FIG. 7. For details, refer to the related descriptions of step 701 in the embodiment shown in FIG. 7.

Optionally, the embodiment shown in FIG. 9 further includes step 901a. Step 901a may be performed before step 901.

901a: The second terminal device sends seventh information to the first terminal device. The seventh information indicates whether the second terminal device accepts the first request initiated by the first terminal device to the second terminal device. Correspondingly, the first terminal device receives the seventh information from the second terminal device.

Step 901a is similar to step 701a in the embodiment shown in FIG. 7. For details, refer to the related descriptions of step 701a in the embodiment shown in FIG. 7.

902: The first terminal device sends a second positioning reference signal to the second terminal device. Correspondingly, the second terminal device receives the second positioning reference signal from the first terminal device.

Step 902 is similar to step 802 in the embodiment shown in FIG. 8. For details, refer to the related descriptions of step 802 in the embodiment shown in FIG. 8.

It should be noted that there is no fixed execution sequence between step 901 and step 902. Step 901 may be performed before step 902, or step 902 is performed before step 901, or step 901 and step 902 are simultaneously performed based on a situation. This is not specifically limited in this application.

903: The second terminal device sends a second request to the first terminal device. The second request is used to request the first terminal device to send a third positioning reference signal. Correspondingly, the first terminal device receives the second request from the second terminal device.

The second request is similar to the first request in step 701 in the embodiment shown in FIG. 7. For details, refer to the related descriptions of the first request.

904: The second terminal device sends the first positioning reference signal to the first terminal device. Correspondingly, the first terminal device receives the first positioning reference signal from the second terminal device.

Step 904 is similar to step 702 in the embodiment shown in FIG. 7. For details, refer to the related descriptions of step 702 in the embodiment shown in FIG. 7.

It should be noted that there is no fixed execution sequence between step 903 and step 904. Step 903 may be performed before step 904, or step 904 is performed before step 903, or step 903 and step 904 are simultaneously performed based on a situation. This is not specifically limited in this application.

Optionally, the embodiment shown in FIG. 9 further includes step 904a. Step 904a may be performed before step 904.

904a: The second terminal device sends second SCI to the first terminal device. Correspondingly, the first terminal device receives the second SCI from the second terminal device.

Step 904a is similar to step 702a in the embodiment shown in FIG. 7. For details, refer to the related descriptions of step 702a in the embodiment shown in FIG. 7.

905: The first terminal device sends the third positioning reference signal to the second terminal device. Correspondingly, the second terminal device receives the third positioning reference signal from the first terminal device.

Specifically, the first terminal device may determine, based on the second request, a configuration used to send the third positioning reference signal. For example, the configuration of the third positioning reference signal includes a time-frequency resource occupied by the third positioning reference signal, a sending periodicity, and the like.

In a possible implementation, the configuration of the third positioning reference signal may be preconfigured. The second terminal device may receive the third positioning reference signal on a corresponding time-frequency resource by using the configuration of the third positioning reference signal.

In another possible implementation, optionally, the embodiment shown in FIG. 9 further includes step 905a. Step 905a may be performed before step 905 and after step 904.

Optionally, the embodiment shown in FIG. 9 further includes step 905a. Step 905a may be performed before step 905.

905a: The first terminal device sends third SCI to the second terminal device. Correspondingly, the second terminal device receives the third SCI from the first terminal device.

The third SCI indicates the configuration of the third positioning reference signal to be sent by the first terminal device. For example, a plurality of positioning reference signal configurations are preconfigured in the first terminal device and the second terminal device. Each positioning reference signal configuration has a corresponding index. The third SCI carries an index of the configuration of the third positioning reference signal. The second terminal device may determine the configuration of the third positioning reference signal by using the index. The second terminal device may receive the third positioning reference signal on a corresponding time-frequency resource by using the configuration of the third positioning reference signal.

Optionally, the embodiment shown in FIG. 9 further includes step 906 to step 909. Step 906 to step 909 may be performed after step 905.

906: The second terminal device obtains a third measurement result through measurement based on the second positioning reference signal and the third positioning reference signal.

For example, the first terminal device sends the second positioning reference signal at a moment u1, and the second terminal device receives the second positioning reference signal at a moment v1. The second terminal device sends the first positioning reference signal at a moment v2, and the first terminal device receives the first positioning reference signal at a moment u2. The first terminal device sends the third positioning reference signal at a moment u3, and the second terminal receives the third positioning reference signal at a moment v3. The second terminal device determines that a receive-transmit time difference between a receive time at which the second terminal device receives the second positioning reference signal and a transmit time at which the second terminal device sends the first positioning reference signal is v1 - v2. The second terminal device determines that a receive-transmit time difference between a receive time at which the second terminal device receives the third positioning reference signal and a transmit time at which the second terminal device sends the first positioning reference signal is v3 - v2. That is, the third measurement result includes the receive-transmit time difference v1 - v2 and the receive-transmit time difference v3 - v2.

907: The second terminal device sends the third measurement result to the first terminal device. Correspondingly, the first terminal device receives the third measurement result from the second terminal device.

Optionally, the second terminal device may send the third measurement result to the first terminal device through an RSPP layer. Correspondingly, the first terminal device receives the third measurement result sent by the second terminal device through the RSPP layer.

Optionally, the second SCI is further used to schedule a PSSCH of the second terminal device, and the third measurement result may be carried on PSSCH of the second terminal device.

908: The first terminal device obtains a first measurement result.

For example, the first terminal device sends the second positioning reference signal at a moment u1, and the second terminal device receives the second positioning reference signal at a moment v1. The second terminal device sends the first positioning reference signal at a moment v2, and the first terminal device receives the first positioning reference signal at a moment u2. The first terminal device sends the third positioning reference signal at a moment u3, and the second terminal device receives the third positioning reference signal at a moment v3. The first terminal device determines that a receive-transmit time difference between a receive time at which the first terminal device receives the first positioning reference signal and a transmit time at which the first terminal device sends the second positioning reference signal is u2 - u1. The first terminal device determines that a receive-transmit time difference between a receive time at which the first terminal device receives the first positioning reference signal and a transmit time at which the first terminal device sends the third positioning reference signal is u2 - u3, that is, the first measurement result includes the receive-transmit time difference u2 - u1 and the receive-transmit time difference u2 - u3.

909: The first terminal device positions the first terminal device and/or the second terminal device based on the first measurement result and the third measurement result.

For example, with reference to the implementations in step 906 and step 908, the third measurement result includes the receive-transmit time difference v1 - v2 and the receive-transmit time difference v3 - v2, and the first measurement result includes the receive-transmit time difference u2 - u1 and the receive-transmit time difference u2 - u3. If there is no clock drift deviation between the first terminal device and the second terminal device, theoretically, there should be the following equation: u2 - u1 + v1 - v2 = v3 - v2 + u2 - u3 = RTT. However, in practice, because there is a clock drift deviation, u2 - u1 + v1 - v2 and v3 - v2 + u2 - u3 are not equal. If a clock drift model is linearized, $u = (1 + a0) * t + k0$, and $v = (1 + a1) * t + k1$, where t is a standard time, and k0 and k1 are fixed constants and correspond to an initial deviation between the first terminal device and the second terminal device and the standard time. a0 and a1 are very small numbers, usually in the order of $10^{-7}$. a0 may be understood as a clock drift deviation of the first terminal device relative to the standard time. a1 may be understood as a clock drift deviation of the second terminal device relative to the standard time. For example, a0 = 0.0000001 indicates that 1 second has passed in the standard time, and 1.0000001 seconds have been observed by the first terminal device. For example, a1 = -0.0000001 indicates that one second has passed in the standard time, and 0.9999999 seconds have been observed by the second terminal device. Herein, eliminating the clock drift deviation is actually calculating a ratio of 1 + a0 to 1 + a1, and clock rates of the two terminal devices are unified to a same clock rate (for example, unified to the first terminal device). A corrected round trip time RTT between the first terminal device and the second terminal device may be calculated by using the following formula 1:

$$RTT = ((u2 - u1) \times (v3 - v2) - (v1 - v2) \times (u2 - u3)) / ((u2 - u1) + (v3 - v2)) \qquad \text{Formula 1}$$

Therefore, the first terminal device may determine that the distance between the first terminal device and the second terminal device is obtained by dividing the round trip time by 2. Optionally, the first terminal device may further determine an angle, a phase location, and the like of the first terminal device relative to the second terminal device with reference to other measurement quantities of the first positioning reference signal, the second positioning reference signal, and the third positioning reference signal.

In the embodiment shown in FIG. 9, the second terminal device may determine a plurality of receive-transmit time differences by using the first positioning reference signal, the second positioning reference signal, and the third positioning reference signal. In this way, the clock drift deviation between the first terminal device and the second terminal device can be determined, and the first terminal device or the second terminal device compensates for the plurality of receive-transmit time differences by using the clock drift deviation. Then, the first terminal device positions the first terminal device and/or the second terminal device by using the round trip time with reference to the plurality of receive-transmit time differences. Therefore, impact caused by the clock drift deviation between the first terminal device and the second terminal device is eliminated, thereby improving positioning accuracy.

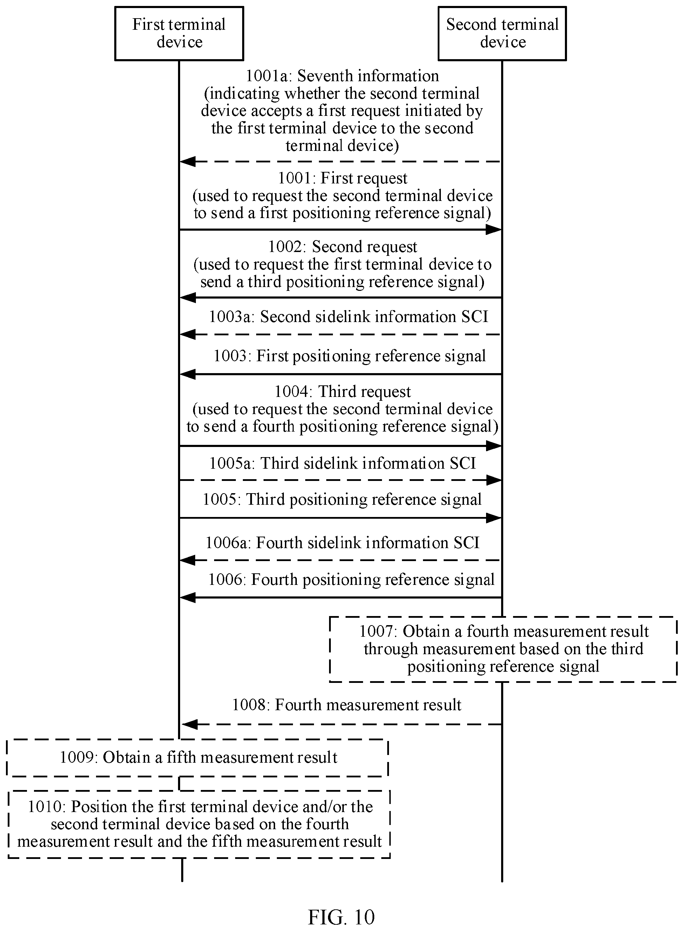

FIG. 10 is a diagram of a fourth embodiment of a communication method according to an embodiment of this application. Refer to FIG. 10. The method includes the following steps.

1001: A first terminal device sends a first request to a second terminal device. The first request is used to request the second terminal device to send a first positioning reference signal. Correspondingly, the second terminal device receives the first request from the first terminal device.

Step 1001 is similar to step 701 in the embodiment shown in FIG. 7. For details, refer to the related descriptions of step 701 in the embodiment shown in FIG. 7.

Optionally, the embodiment shown in FIG. 10 further includes step 1001a. Step 1001a may be performed before step 1001.

1001a: The second terminal device sends seventh information to the first terminal device. The seventh information indicates whether the second terminal device accepts the first request initiated by the first terminal device to the second terminal device. Correspondingly, the first terminal device receives the seventh information from the second terminal device.

Step 1001a is similar to step 701a in the embodiment shown in FIG. 7. For details, refer to the related descriptions of step 701a in the embodiment shown in FIG. 7.

1002: The second terminal device sends a second request to the first terminal device. The second request is used to request the first terminal device to send a third positioning reference signal. Correspondingly, the first terminal device receives the second request from the second terminal device.

The second request is similar to the first request in step 701 in the embodiment shown in FIG. 7. For details, refer to the related descriptions of the first request.

1003: The second terminal device sends the first positioning reference signal to the first terminal device. Correspondingly, the first terminal device receives the first positioning reference signal from the second terminal device.

Step 1003 is similar to step 702 in the embodiment shown in FIG. 7. For details, refer to the related descriptions of step 702 in the embodiment shown in FIG. 7.

It should be noted that there is no fixed execution sequence between step 1002 and step 1003. Step 1002 may be performed before step 1003, or step 1003 is performed before step 1002, or step 1002 and step 1003 are simultaneously performed based on a situation. This is not specifically limited in this application.

Optionally, the embodiment shown in FIG. 10 further includes step 1003a. Step 1003a may be performed before step 1003.

1003a: The second terminal device sends second SCI to the first terminal device. Correspondingly, the first terminal device receives the second SCI from the second terminal device.

Step 1003a is similar to step 702a in the embodiment shown in FIG. 7. For details, refer to the related descriptions of step 702a in the embodiment shown in FIG. 7.

1004: The first terminal device sends a third request to the second terminal device. The third request is used to request the second terminal device to send a fourth positioning reference signal. Correspondingly, the second terminal device receives the third request from the first terminal device.

The third request is similar to the first request. For details, refer to the related descriptions of the first request in step 701 in the embodiment shown in FIG. 7. Details are not described herein again.

1005: The first terminal device sends the third positioning reference signal to the second terminal device. Correspondingly, the second terminal device receives the third positioning reference signal from the first terminal device.

Step 1005 is similar to step 905 in the embodiment shown in FIG. 9. For details, refer to the related descriptions of step 905 in the embodiment shown in FIG. 9. Details are not described herein again.

It should be noted that there is no fixed execution sequence between step 1004 and step 1005. Step 1004 may be performed before step 1005, or step 1005 is performed before step 1004, or step 1004 and step 1005 are simultaneously performed based on a situation. This is not specifically limited in this application.

Optionally, the embodiment shown in FIG. 10 further includes step 1005a. Step 1005a may be performed before step 1005.

1005a: The second terminal device sends third SCI to the first terminal device. Correspondingly, the first terminal device receives the third SCI from the second terminal device.

Step 1005a is similar to step 905a in the embodiment shown in FIG. 9. For details, refer to the related descriptions of step 905a in the embodiment shown in FIG. 9.

1006: The second terminal device sends the fourth positioning reference signal to the first terminal device. Correspondingly, the first terminal device receives the fourth positioning reference signal from the second terminal device.

Specifically, the second terminal device determines, based on the third request, a configuration used to send the fourth positioning reference signal. For example, the configuration of the fourth positioning reference signal includes a time-frequency resource occupied by the fourth positioning reference signal, a sending periodicity, and the like.

In a possible implementation, the configuration of the fourth positioning reference signal may be preconfigured. The first terminal device may receive the fourth positioning reference signal on a corresponding time-frequency resource by using the configuration of the fourth positioning reference signal.

In another possible implementation, optionally, the embodiment shown in FIG. 10 further includes step 1006a. Step 1006a may be performed before step 1006.

1006a: The second terminal device sends fourth SCI to the first terminal device. Correspondingly, the first terminal device receives the fourth SCI from the second terminal device.

The fourth SCI indicates the configuration of the fourth positioning reference signal to be sent by the second terminal device. For example, a plurality of positioning reference signal configurations are preconfigured in the first terminal device and the second terminal device. Each positioning reference signal configuration has a corresponding index. The fourth SCI carries an index of the configuration of the fourth positioning reference signal. The first terminal device may determine the configuration of the fourth positioning reference signal by using the index. The first terminal device may receive the fourth positioning reference signal on a corresponding time-frequency resource by using the configuration of the fourth positioning reference signal.

Optionally, the embodiment shown in FIG. 10 further includes step 1007 to step 1010. Step 1007 to step 1010 may be performed after step 1006.

1007: The second terminal device obtains a fourth measurement result through measurement based on the third positioning reference signal.

For example, the second terminal device sends the first positioning reference signal at a moment v1, and the first terminal device receives the first positioning reference signal at a moment u1. The first terminal device sends the third positioning reference signal at a moment u2, and the second terminal device receives the third positioning reference signal at a moment v2. The second terminal device sends the fourth positioning reference signal at a moment v3, and the first terminal device receives the fourth positioning reference signal at a moment u3. The second terminal device determines that a receive-transmit time difference between a receive time at which the second terminal device receives the third positioning reference signal and a transmit time at which the second terminal device sends the first positioning reference signal is v2 - v1. The second terminal device determines that a receive-transmit time difference between a receive time at which the second terminal device receives the third positioning reference signal and a transmit time at which the second terminal device sends the fourth positioning reference signal is v2 - v3. That is, the fourth measurement result includes the receive-transmit time difference v2 - v1 and the receive-transmit time difference v2 - v3.

1008: The second terminal device sends the fourth measurement result to the first terminal device. Correspondingly, the first terminal device receives the fourth measurement result from the second terminal device.

Optionally, the second terminal device may send the fourth measurement result to the first terminal device through an RSPP layer. Correspondingly, the first terminal device receives the fourth measurement result sent by the second terminal device through the RSPP layer.

Optionally, the fourth SCI is further used to schedule a PSCCH of the second terminal device, and the fourth measurement result may be carried on the PSCCH of the second terminal device.

1009: The first terminal device obtains a fifth measurement result.

The fifth measurement result is obtained by the first terminal device through measurement based on the first positioning reference signal and the fourth positioning reference signal.

Specifically, the second terminal device sends the first positioning reference signal at a moment v1, and the first terminal device receives the first positioning reference signal at a moment u1. The first terminal device sends the third positioning reference signal at a moment u2, and the second terminal device receives the third positioning reference signal at a moment v2. The second terminal device sends the fourth positioning reference signal at a moment v3, and the first terminal device receives the fourth positioning reference signal at a moment u3. The first terminal device determines that a receive-transmit time difference between a receive time at which the first terminal device receives the first positioning reference signal and a transmit time at which the first terminal device sends the third positioning reference signal is u1 - u2. The first terminal device determines that a receive-transmit time difference between a receive time at which the first terminal device receives the fourth positioning reference signal and a transmit time at which the first terminal device sends the third positioning reference signal is u3 - u2. That is, the fifth measurement result includes the receive-transmit time difference u1 - u2 and the receive-transmit time difference u3 - u2.

1010: The first terminal device positions the first terminal device and/or the second terminal device based on the fourth measurement result and the fifth measurement result.

For example, with reference to the examples of the foregoing steps 1007 and 1009, it can be learned that the fourth measurement result includes the receive-transmit time difference v2 - v1 and the receive-transmit time difference v2 - v3, and the fifth measurement result includes the receive-transmit time difference u1 - u2 and the receive-transmit time difference u3 - u2.

If there is no clock drift deviation between the first terminal device and the second terminal device, theoretically, there should be the following equation: v2 - v1 + u1 - u2 = u3 - u2 + v2 - v3 = RTT. However, in practice, because there is a clock drift deviation, the two are not equal. If a clock drift model is linearized, u = (1 + a0) * t + k0, and v = (1 + a1) * t + k1, where t is a standard time, and k0 and k1 are fixed constants, corresponding to an initial deviation between the first terminal device and the second terminal device and the standard time. a0 and a1 are very small numbers, usually in the order of 10^-7. a0 may be understood as a clock drift deviation of the first terminal device relative to the standard time. a1 may be understood as a clock drift deviation of the second terminal device relative to the standard time. For example, a0 = 0.0000001 indicates that 1 second has passed in the standard time, and 1.0000001 seconds have been observed by the first terminal device. For example, a1 = -0.0000001 indicates that one second has passed in the standard time, and 0.9999999 seconds have been observed by the second terminal device. Herein, eliminating the clock drift deviation is actually calculating a ratio of 1 + a0 to 1 + a1, and clock rates of the two terminal devices are unified to a same clock rate (for example, unified to the first terminal device). A corrected round trip time RTT between the first terminal device and the second terminal device may be calculated by using the following formula 2:

$$RTT = ((v2 - v1) \times (u3 - u2) - (v2 - v3) \times (u1 - u2)) / ((v2 - v1) + (u3 - u2)) \qquad \text{Formula 2}$$

Therefore, the first terminal device may determine that the distance between the first terminal device and the second terminal device is obtained by dividing the round trip time by 2. Optionally, the first terminal device may further determine an angle, a phase location, and the like of the first terminal device relative to the second terminal device with reference to other measurement quantities of the first positioning reference signal, the third positioning reference signal, and the fourth positioning reference signal.

In the embodiment shown in FIG. 10, the first terminal device may determine a plurality of receive-transmit time differences by using the first positioning reference signal, the third positioning reference signal, and the fourth positioning reference signal. In this way, the clock drift deviation between the first terminal device and the second terminal device can be determined, and the receive-transmit time differences are compensated for by using the clock drift deviation. Then, the first terminal device positions the first terminal device and/or the second terminal device by using the round trip time with reference to the plurality of receive-transmit time differences. Therefore, impact caused by the clock drift deviation between the first terminal device and the second terminal device is eliminated, thereby improving positioning accuracy.

This application further provides another embodiment. This embodiment is similar to the embodiment shown in FIG. 10, and a difference lies in that the first request in step 1001 is used to request the second terminal device to send the first positioning reference signal and the fourth positioning reference signal. This embodiment does not include step 1004. That is, the first terminal device requests, by using the first request, the second terminal device to send a positioning reference signal for a plurality of times. In this way, the first terminal device can obtain a plurality of receive and transmit time differences through measurement. In this way, the clock drift deviation between the first terminal device and the second terminal device can be determined, and the receive-transmit time differences are compensated for by using the clock drift deviation. Then, the first terminal device positions the first terminal device and/or the second terminal device by using the round trip time with reference to the plurality of receive-transmit time differences. Therefore, impact caused by the clock drift deviation between the first terminal device and the second terminal device is eliminated, thereby improving positioning accuracy.

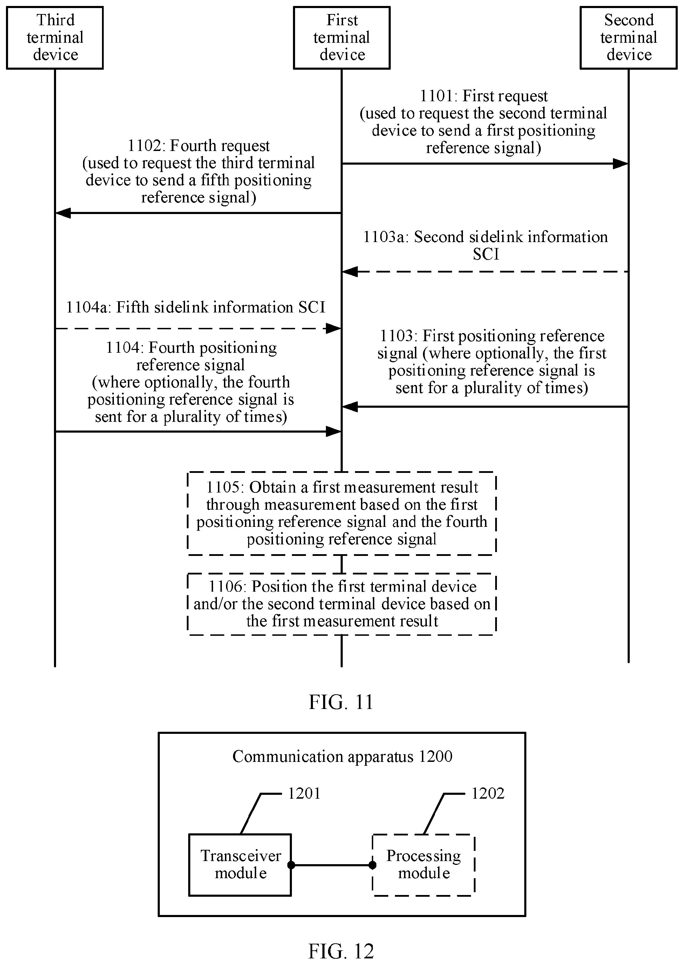

FIG. 11 is a diagram of a fifth embodiment of a communication method according to an embodiment of this application. Refer to FIG. 11. The method includes the following steps.

1101: A first terminal device sends a first request to a second terminal device. The first request is used to request the second terminal device to send a first positioning reference signal. Correspondingly, the second terminal device receives the first request from the first terminal device.

Step 1101 is similar to step 701 in the embodiment shown in FIG. 7. For details, refer to the related descriptions of step 701 in the embodiment shown in FIG. 7. Details are not described herein again.

It should be noted that optionally, the first request is used to request the second terminal device to send the first positioning reference signal for a plurality of times.

1102: The first terminal device sends a fourth request to a third terminal device. The fourth request is used to request the third terminal device to send a fifth positioning reference signal. Correspondingly, the third terminal device receives the fourth request from the first terminal device.

The fourth request is similar to the first request. For details, refer to the related descriptions of step 701 in the embodiment shown in FIG. 7. Details are not described herein again.

It should be noted that optionally, the fourth request is used to request the third terminal device to send the fifth positioning reference signal for a plurality of times.

It should be noted that there is no fixed execution sequence between step 1101 and step 1102. Step 1101 may be performed before step 1102, or step 1102 is performed before step 1101, or step 1101 and step 1102 are simultaneously performed based on a situation. This is not specifically limited in this application.

1103: The second terminal device sends the first positioning reference signal to the first terminal device.

Correspondingly, the first terminal device receives the first positioning reference signal from the second terminal device.

Step 1103 is similar to step 702 in the embodiment shown in FIG. 7. For details, refer to the related descriptions of step 702 in the embodiment shown in FIG. 7.

Optionally, the second terminal device sends the first positioning reference signal to the second terminal device for a plurality of times based on the first request.

Optionally, the embodiment shown in FIG. 11 further includes step 1103a. Step 1103a may be performed before step 1103.

1103a: The second terminal device sends second SCI to the first terminal device. Correspondingly, the first terminal device receives the second SCI from the second terminal device.

Step 1103a is similar to step 702a in the embodiment shown in FIG. 7. For details, refer to the related descriptions of step 702a in the embodiment shown in FIG. 7.

1104: The third terminal device sends a fourth positioning reference signal to the first terminal device. Correspondingly, the first terminal device receives the fourth positioning reference signal from the third terminal device.

Step 1104 is similar to step 702 in the embodiment shown in FIG. 7. For details, refer to the related descriptions of step 702 in the embodiment shown in FIG. 7.

Optionally, the third terminal device sends the fourth positioning reference signal to the first terminal device for a plurality of times based on the fourth request.

Optionally, the embodiment shown in FIG. 11 further includes step 1104a. Step 1104a may be performed before step 1104.

1104a: The third terminal device sends fifth SCI to the first terminal device. Correspondingly, the first terminal device receives the fifth SCI from the third terminal device.

Step 1104a is similar to step 702a in the embodiment shown in FIG. 7. For details, refer to the related descriptions of step 702a in the embodiment shown in FIG. 7.

It should be noted that there is no fixed execution sequence between step 1103 and step 1104. Step 1103 may be performed before step 1104, or step 1104 is performed before step 1103, or step 1103 and step 1104 are simultaneously performed based on a situation. This is not specifically limited in this application.

It should be noted that there is no fixed execution sequence between step 1103a and step 1104a. Step 1103a may be performed before step 1104a, or step 1104a is performed before step 1103a, or step 1103a and step 1104a are simultaneously performed based on a situation. This is not specifically limited in this application.

Optionally, the embodiment shown in FIG. 11 further includes step 1105 and step 1106. Step 1105 and step 1106 may be performed after step 1104.

1105: The first terminal device obtains a first measurement result through measurement based on the first positioning reference signal and the fourth positioning reference signal.

In a possible implementation, the first terminal device measures the first positioning reference signal and the fourth positioning reference signal to obtain a time difference of arrival between a time of arrival at which the first positioning reference signal arrives at the first terminal device and a time of arrival at which the fourth positioning reference signal arrives at the first terminal device. In other words, the first measurement result includes a time difference of arrival between a time of arrival at which the first positioning reference signal arrives at the first terminal device and a time of arrival at which the fourth positioning reference signal arrives at the first terminal device.

In another possible implementation, the first terminal device indicates, by using the first request, the second terminal device to send the first positioning reference signal in a first mode. The first terminal device indicates, by using the fourth request, the third terminal device to send the fifth positioning reference signal in the first mode. The second terminal device sends the first positioning reference signal in the first mode, and the third terminal device sends the fifth positioning reference signal in the first mode. For the first mode, refer to the foregoing related descriptions. The first terminal device measures a receive power difference between first positioning reference signals sent by the second terminal device by using a plurality of transmit beams, and also measures a power difference between fifth positioning reference signals sent by the third terminal device on a plurality of transmit beams. To be specific, the first measurement result includes a receive power difference that is obtained through measurement by the first terminal device and that is between first positioning reference signals sent by the second terminal device on a plurality of transmit beams and a receive power difference that is obtained through measurement by the first terminal device and that is between fifth positioning reference signals sent by the third terminal device on a plurality of transmit beams.

In still another possible implementation, the first terminal device indicates, by using the first request, the second terminal device to send the first positioning reference signal in a second mode. The first terminal device indicates, by using the fourth request, the third terminal device to send the fifth positioning reference signal in a second mode. The second terminal device sends the first positioning reference signal in the second mode, and the third terminal device sends the fifth positioning reference signal in the second mode. For the second mode, refer to the foregoing related descriptions. The second terminal device sends the first positioning reference signal in the second mode. The third terminal device sends the fifth positioning reference signal in the second mode. The first terminal device measures a receive phase difference between first positioning reference signals sent by the second terminal device through a plurality of transmit antennas, and also measures a receive phase difference between fifth positioning reference signals sent by the third terminal device through a plurality of transmit antennas. In other words, the first measurement result includes a receive phase difference that is obtained by the first terminal device through measurement and that is between first positioning reference signals sent by the second terminal device on a plurality of transmit antennas and a receive phase difference that is obtained by the first terminal device through measurement and that is between fifth positioning reference signals sent by the third terminal device on a plurality of transmit antennas.

1106: The first terminal device positions at least one of the first terminal device, the second terminal device, and the third terminal device based on the first measurement result.

For example, the first measurement result includes a time difference of arrival between a time of arrival at which the first positioning reference signal arrives at the first terminal device and a time of arrival at which the fourth positioning reference signal arrives at the first terminal device. The first terminal device learns of an absolute location of the first terminal device. The first terminal device may determine relative locations of the first terminal device and the second terminal device, relative locations of the first terminal device and the third terminal device, a distance between the first terminal device and the second terminal device, a distance between the first terminal device and the third terminal device, an absolute location of the second terminal device, an absolute location of the third terminal device, and the like based on the time difference of arrival.

For example, the first measurement result includes a receive power difference that is obtained through measurement by the first terminal device and that is between first positioning reference signals sent by the second terminal device on a plurality of transmit beams and a receive power difference that is obtained through measurement by the first terminal device and that is between fifth positioning reference signals sent by the third terminal device on a plurality of transmit beams. The first terminal device learns of an absolute location of the first terminal device. The first terminal device may determine relative locations of the first terminal device and the second terminal device, relative locations of the first terminal device and the third terminal device, a distance between the first terminal device and the second terminal device, a distance between the first terminal device and the third terminal device, an absolute location of the second terminal device, an absolute location of the third terminal device, and the like based on the first measurement result.

For example, the first measurement result includes a receive phase difference that is obtained by the first terminal device through measurement and that is between first positioning reference signals sent by the second terminal device on a plurality of transmit antennas and a receive phase difference that is obtained by the first terminal device through measurement and that is between fifth positioning reference signals sent by the third terminal device on a plurality of transmit antennas. The first terminal device learns of an absolute location of the first terminal device. The first terminal device may determine relative locations of the first terminal device and the second terminal device, relative locations of the first terminal device and the third terminal device, a distance between the first terminal device and the second terminal device, a distance between the first terminal device and the third terminal device, an absolute location of the second terminal device, an absolute location of the third terminal device, and the like based on the first measurement result.

In the embodiment shown in FIG. 11, the first terminal device may obtain the first measurement result through measurement by using the first positioning reference signal and the fifth positioning reference signal. For example, the first measurement result includes a time difference of arrival between a time of arrival at which the first positioning reference signal arrives at the first terminal device and a time of arrival at which the fourth positioning reference signal arrives at the first terminal device. Alternatively, the first measurement result includes a receive power difference that is obtained through measurement by the first terminal device and that is between first positioning reference signals sent by the second terminal device on a plurality of transmit beams and a receive power difference that is obtained through measurement by the first terminal device and that is between fifth positioning reference signals sent by the third terminal device on a plurality of transmit beams. Alternatively, the first measurement result includes a receive phase difference that is obtained by the first terminal device through measurement and that is between first positioning reference signals sent by the second terminal device on a plurality of transmit antennas and a receive phase difference that is obtained by the first terminal device through measurement and that is between fifth positioning reference signals sent by the third terminal device on a plurality of transmit antennas. Then, the first terminal device may position the first terminal device and/or the second terminal device with reference to the first measurement result. Specifically, the positioning may be AOD positioning, time difference of arrival positioning, angle of arrival positioning, or the like, thereby improving positioning accuracy.

It should be noted that, in the embodiment shown in FIG. 11, the technical solution in this application is described by using an example in which the first terminal device requests the second terminal device and the third terminal device to initiate a request for transmitting a positioning reference signal. During actual application, the first terminal device may further initiate a request for transmitting a positioning reference signal to more terminal devices, and receive positioning reference signals sent by the more terminal devices. In this way, the first terminal device positions the more terminal devices, or the positioning reference signals of the more terminal devices assist the first terminal device position the second terminal device.

The foregoing method embodiments may be implemented separately or in combination. For terms and related technologies in embodiments, refer to each other. In other words, technical solutions that do not conflict with each other or that do not logically conflict with each other in different embodiments may be combined with each other. This is not specifically limited in this application.

The following describes a communication apparatus provided in this application. FIG. 12 is a diagram of a first structure of a communication apparatus according to an embodiment of this application. Refer to FIG. 12. The communication apparatus 1200 includes a transceiver module 1201. The communication apparatus 1200 further includes a processing module 1202.

Optionally, when the communication apparatus 1200 includes a first terminal device or a chip in a first terminal device, the communication apparatus 1200 may be configured to perform all or some of the steps performed by the first terminal device in the embodiments shown in FIG. 7 to FIG. 11. For details, refer to the related descriptions in the method embodiments shown in FIG. 7 to FIG. 11.

The transceiver module 1201 is configured to: send a first request to a second terminal device, where the first request is used to request the second terminal device to send a first positioning reference signal; the first request includes at least one of the following: first information, second information, third information, fourth information, or fifth information; the first information indicates the communication apparatus 1200 to request the second terminal device to send the first positioning reference signal; the second information indicates a time domain feature that needs to be met by the first positioning reference signal; the third information indicates a positioning method used to position the communication apparatus 1200 and/or the second terminal device; the fourth information indicates a transmission priority of the first positioning reference signal; and the fifth information indicates a frequency domain feature that needs to be met by the first positioning reference signal; and receive the first positioning reference signal from the second terminal device.

In a possible implementation, the time domain feature includes at least one of the following: the first positioning reference signal is sent at a slot level, a subslot level, or a time domain symbol level; the first positioning reference signal occupies at least one slot or at least one time domain symbol; when the at least one slot includes a plurality of slots, the plurality of slots include a consecutive slot and/or a non-consecutive slot; or when the at least one time domain symbol includes a plurality of time domain symbols, the plurality of time domain symbols include a consecutive time domain symbol and/or a non-consecutive time domain symbol.

In another possible implementation, the frequency domain feature includes at least one of the following: a sending bandwidth of the first positioning reference signal, a resource pool in which the sending bandwidth is located, or a frequency occupied by the first positioning reference signal.

In another possible implementation, the positioning method includes any one of the following: an RTT positioning method, an AOA positioning method, an AOD positioning method, or a TDOA positioning method.

In a possible implementation, when the positioning method is the AOD positioning method, the first request further includes sixth information, and the sixth information indicates an AOD angle positioning mode used for the first positioning reference signal.

In another possible implementation, the third information indicates the AOD angle positioning mode used for the first positioning reference signal, to indicate, by using the AOD angle positioning mode indicated by the third information, that the positioning method is the AOD positioning method.

In another possible implementation, the AOD angle positioning mode used for the first positioning reference signal includes a first mode or a second mode, the first mode includes that the second terminal device sends the first positioning reference signal in a beam switching manner, and the second mode includes that the second terminal device sends the first positioning reference signal in an antenna switching manner.

In another possible implementation, the first information further indicates whether the communication apparatus 1200 sends a second positioning reference signal to the second terminal device.

In another possible implementation, the first information is indication information; and when a value of the indication information is a first value, it indicates that the communication apparatus 1200 requests the second terminal device to send the first positioning reference signal and the communication apparatus 1200 sends the second positioning reference signal to the second terminal device; or when a value of the indication information is a second value, it indicates that the communication apparatus 1200 requests the second terminal device to send the first positioning reference signal and the communication apparatus 1200 does not send the second positioning reference signal to the second terminal device.

In another possible implementation, the first information is carried in SCI, and at least one of the second information, the third information, the fourth information, and the fifth information is carried in an SL MAC CE.

In another possible implementation, the first request is carried in the SCI or the SL MAC CE.

In another possible implementation, the processing module 1202 is further configured to: obtain a first measurement result, where the first measurement result is obtained by the communication apparatus 1200 through measurement based on the first positioning reference signal; and position the communication apparatus 1200 and/or the second terminal device based on the first measurement result.

In another possible implementation, the transceiver module 1201 is further configured to send the second positioning reference signal to the second terminal device.

In another possible implementation, the processing module 1202 is further configured to obtain the first measurement result, where the first measurement result is obtained by the communication apparatus 1200 through measurement based on the first positioning reference signal; the transceiver module 1201 is further configured to receive the second measurement result from the second terminal device, where the second measurement result is obtained by the second terminal device through measurement based on the second positioning reference signal; and the processing module 1202 is further configured to position the communication apparatus 1200 and/or the second terminal device based on the first measurement result and the second measurement result.

In another possible implementation, the transceiver module 1201 is further configured to: receive a second request from the second terminal device, where the second request is used to request the communication apparatus 1200 to send a third positioning reference signal; and send the third positioning reference signal to the second terminal device.

In another possible implementation, the transceiver module 1201 is further configured to: send a third request to the second terminal device, where the third request is used to request the second terminal device to send a fourth positioning reference signal; and receive the fourth positioning reference signal from the second terminal device.

In another possible implementation, the transceiver module 1201 is further configured to: send a fourth request to a third terminal device, where the fourth request is used to request the third terminal device to send a fifth positioning reference signal; and receive the fifth positioning reference signal from the third terminal device.

In another possible implementation, the transceiver module 1201 is further configured to receive seventh information from the second terminal device, where the seventh information indicates whether the second terminal device accepts the first request initiated by the communication apparatus 1200 to the second terminal device.

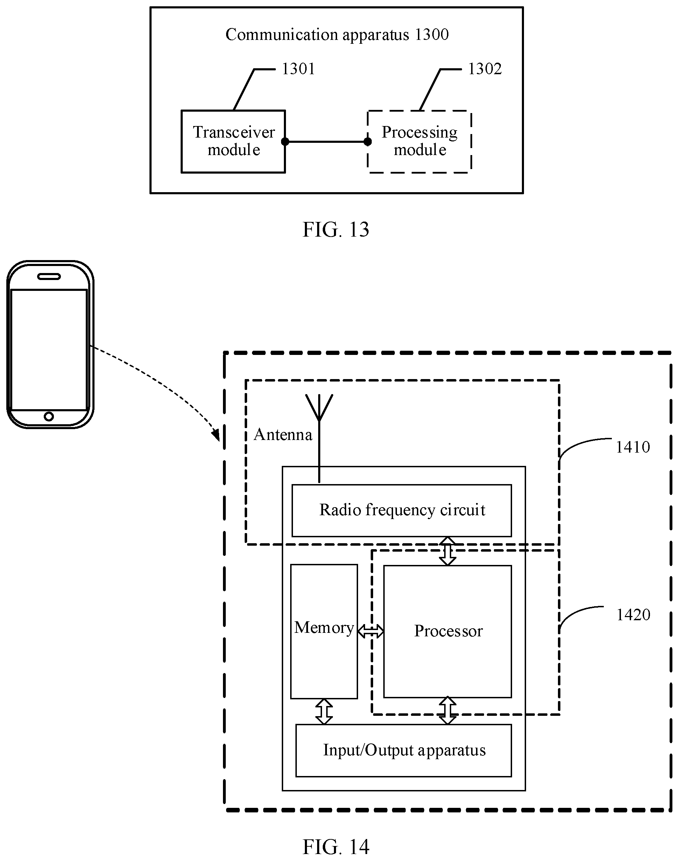

The following describes a communication apparatus provided in this application. FIG. 13 is a diagram of a second structure of a communication apparatus according to an embodiment of this application. Refer to FIG. 13. The communication apparatus 1300 includes a transceiver module 1301. The communication apparatus 1300 further includes a processing module 1302.

Optionally, when the communication apparatus 1300 includes a second terminal device or a chip in a second terminal device, the communication apparatus 1300 may be configured to perform all or some of the steps performed by the second terminal device in the embodiments shown in FIG. 7 to FIG. 11. For details, refer to the related descriptions in the method embodiments shown in FIG. 7 to FIG. 11.

The transceiver module 1301 is configured to: receive a first request from a first terminal device, where the first request is used to request the communication apparatus 1300 to send a first positioning reference signal; the first request includes at least one of the following: first information, second information, third information, fourth information, or fifth information; the first information indicates the first terminal device to request the communication apparatus 1300 to send the first positioning reference signal; the second information indicates a time domain feature that needs to be met by the first positioning reference signal; the third information indicates a positioning method used to position the first terminal device and/or the communication apparatus 1300; the fourth information indicates a transmission priority of the first positioning reference signal; and the fifth information indicates a frequency domain feature that needs to be met by the first positioning reference signal; and send the first positioning reference signal to the first terminal device based on the first request.

In a possible implementation, the time domain feature includes at least one of the following: the first positioning reference signal is sent at a slot level, a subslot level, or a time domain symbol level; the first positioning reference signal occupies at least one slot or at least one time domain symbol; when the at least one slot includes a plurality of slots, the plurality of slots include a consecutive slot and/or a non-consecutive slot; or when the at least one time domain symbol includes a plurality of time domain symbols, the plurality of time domain symbols include a consecutive time domain symbol and/or a non-consecutive time domain symbol.

In another possible implementation, the frequency domain feature includes at least one of the following: a sending bandwidth of the first positioning reference signal, a resource pool in which the sending bandwidth is located, or a frequency occupied by the first positioning reference signal.

In another possible implementation, the positioning method includes any one of the following: an RTT positioning method, an AOA positioning method, an AOD positioning method, or a TDOA positioning method.

In another possible implementation, when the positioning method is the AOD positioning method, the first request further includes sixth information, and the sixth information indicates an AOD angle positioning mode used for the first positioning reference signal.

In another possible implementation, the third information indicates the AOD angle positioning mode used for the first positioning reference signal, to indicate, by using the AOD angle positioning mode indicated by the third information, that the positioning method is the AOD positioning method.

In another possible implementation, the AOD angle positioning mode used for the first positioning reference signal includes a first mode or a second mode, the first mode includes that the communication apparatus 1300 sends the first positioning reference signal in a beam switching manner, and the second mode includes that the communication apparatus 1300 sends the first positioning reference signal in an antenna switching manner.

In another possible implementation, the first information further indicates whether the first terminal device sends a second positioning reference signal to the communication apparatus 1300.

In another possible implementation, the first information is indication information; and when a value of the indication information is a first value, it indicates that the first terminal device requests the communication apparatus 1300 to send the first positioning reference signal and the first terminal device sends the second positioning reference signal to the communication apparatus 1300; or when a value of the indication information is a second value, it indicates that the first terminal device requests the communication apparatus 1300 to send the first positioning reference signal and the first terminal device does not send the second positioning reference signal to the communication apparatus 1300.

In another possible implementation, the first information is carried in SCI, and at least one of the second information, the third information, the fourth information, and the fifth information is carried in an SL MAC CE.

In another possible implementation, the first request is carried in the SCI or the SL MAC CE.

In another possible implementation, the transceiver module 1301 is further configured to receive the second positioning reference signal from the first terminal device.

In another possible implementation, the processing module 1302 is further configured to obtain a second measurement result through measurement based on the second positioning reference signal, and the transceiver module 1301 is configured to send the second measurement result to the first terminal device.

In another possible implementation, the transceiver module 1301 is further configured to: send a second request to the first terminal device, where the second request is used to request the first terminal device to send a third positioning reference signal; and receive the third positioning reference signal from the first terminal device.

In another possible implementation, the transceiver module 1301 is further configured to: receive a third request from the first terminal device, where the third request is used to request the communication apparatus 1300 to send a fourth positioning reference signal; and send the fourth positioning reference signal to the first terminal device.

In another possible implementation, the transceiver module 1301 is further configured to send seventh information to the first terminal device, where the seventh information indicates whether the communication apparatus 1300 accepts the first request initiated by the first terminal device to the communication apparatus 1300.

FIG. 14 below is a diagram of a possible structure of a terminal device.

FIG. 14 is a simplified diagram of a structure of a terminal device. For ease of understanding and illustration, an example in which the terminal device is a mobile phone is used in FIG. 14. As shown in FIG. 14, the terminal device includes a processor, a memory, a radio frequency circuit, an antenna, and an input/output apparatus.

The processor is mainly configured to: process a communication protocol and communication data, control the terminal device, execute a software program, process data of the software program, and so on.

The memory is mainly configured to store the software program and data. The radio frequency circuit is mainly configured to: perform conversion between a baseband signal and a radio frequency signal, and process the radio frequency signal.

The antenna is mainly configured to receive and send a radio frequency signal in a form of an electromagnetic wave. The input/output apparatus, such as a touchscreen, a display, or a keyboard, is mainly configured to receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data and processes the data. For ease of description, FIG. 14 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device. As shown in FIG. 14, the terminal device includes a transceiver unit 1410 and a processing unit 1420. The transceiver unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the transceiver unit 1410 may be considered as a receiving unit, and a component configured to implement a sending function in the transceiver unit 1410 may be considered as a sending unit. In other words, the transceiver unit 1410 includes a receiving unit and a sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1410 is configured to perform sending operations and receiving operations of the first terminal device, the second terminal device, or the third terminal device in the foregoing method embodiments, and the processing unit 1420 is configured to perform other operations other than the sending and receiving operations of the first terminal device, the second terminal device, or the third terminal device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip. In the foregoing method embodiments, a sending operation corresponds to an output of the input/output circuit, and a receiving operation corresponds to an input of the input/output circuit.

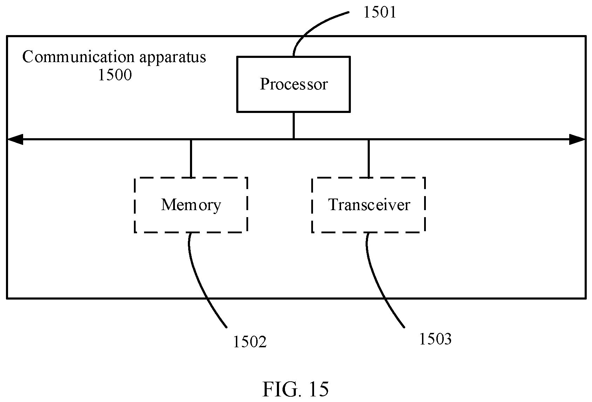

This application further provides a communication apparatus. FIG. 15 is a diagram of a third structure of a communication apparatus according to an embodiment of this application. Refer to FIG. 15. The communication apparatus 1500 includes a processor 1501. Optionally, the communication apparatus 1500 further includes a memory 1502 and a transceiver 1503.

The processor 1501, the memory 1502, and the transceiver 1503 are separately connected through a bus, and the memory stores computer instructions.

When the communication apparatus 1500 includes a terminal device or a chip in a terminal device, the communication apparatus 1500 may be configured to perform the steps performed by the first terminal device, the second terminal device, or the third terminal device in the embodiments shown in FIG. 7 to FIG. 11. For details, refer to the related descriptions in the foregoing method embodiments.

When the communication apparatus 1500 may be configured to perform the steps performed by the first terminal device in the embodiments shown in FIG. 7 to FIG. 11, the transceiver module 1201 shown in FIG. 12 may be specifically the transceiver 1503. Therefore, specific implementation of the transceiver 1503 is not described again. The processing module 1202 shown in FIG. 12 may be specifically the processor 1501. Therefore, specific implementation of the processor 1501 is not described again.

When the communication apparatus 1500 may be configured to perform the steps performed by the second terminal device in the embodiments shown in FIG. 7 to FIG. 11, the transceiver module 1301 shown in FIG. 13 may be specifically the transceiver 1503. Therefore, specific implementation of the transceiver 1503 is not described again. The processing module 1302 shown in FIG. 13 may be specifically the processor 1501. Therefore, specific implementation of the processor 1501 is not described again.

An embodiment of this application further provides a communication system. The communication system includes a first terminal device and a second terminal device. The first terminal device is configured to perform all or some of the steps performed by the first terminal device in the embodiments shown in FIG. 7 to FIG. 11. The second terminal device is configured to perform all or some of the steps performed by the second terminal device in the embodiments shown in FIG. 7 to FIG. 11.

Optionally, the communication system further includes a third terminal device, and the third terminal device is configured to perform all or some of the steps performed by the third terminal device in the embodiment shown in FIG. 11.

An embodiment of this application further provides a computer program product including computer instructions. When the computer program product runs on a computer, the computer is enabled to perform the communication methods in the embodiments shown in FIG. 7 to FIG. 11.

An embodiment of this application further provides a computer-readable storage medium, including computer instructions. When the computer instructions are run on a computer, the computer is enabled to perform the communication methods in the embodiments shown in FIG. 7 to FIG. 11.

An embodiment of this application further provides a chip apparatus, including a processor, configured to invoke a computer program or computer instructions stored in a memory, so that the processor performs the communication methods in the embodiments shown in FIG. 7 to FIG. 11.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the communication methods in the embodiments shown in FIG. 7 to FIG. 11. The memory mentioned anywhere above may be a read-only memory (read-only memory, ROM), another type of static storage device that can store static information and instructions, a random access memory (random access memory, RAM), or the like.

Persons skilled in the art may clearly understand that, for convenient and brief description, for explanations and beneficial effects of related content in any one of the communication apparatuses provided above, refer to the corresponding method embodiments provided above. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When implemented in a form of a software functional unit and sold and used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

As described above, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1.   A communication method, wherein the method comprises:

sending, by a first terminal device, a first request to a second terminal device, wherein the first request is used to request the second terminal device to send a first positioning reference signal; the first request comprises at least one of the following: first information, second information, third information, fourth information, or fifth information; the first information indicates the first terminal device to request the second terminal device to send the first positioning reference signal; the second information indicates a time domain feature that needs to be met by the first positioning reference signal; the third information indicates a positioning method used to position the first terminal device and/or the second terminal device; the fourth information indicates a transmission priority of the first positioning reference signal; and the fifth information indicates a frequency domain feature that needs to be met by the first positioning reference signal; and
receiving, by the first terminal device, the first positioning reference signal from the second terminal device.

2.   A communication method, wherein the method comprises:

receiving, by a second terminal device, a first request from a first terminal device, wherein the first request is used to request the second terminal device to send a first positioning reference signal; the first request comprises at least one of the following: first information, second information, third information, fourth information, or fifth information; the first information indicates the first terminal device to request the second terminal device to send the first positioning reference signal; the second information indicates a time domain feature that needs to be met by the first positioning reference signal; the third information indicates a positioning method used to position the first terminal device and/or the second terminal device; the fourth information indicates a transmission priority of the first positioning reference signal; and the fifth information indicates a frequency domain feature that needs to be met by the first positioning reference signal; and

sending, by the second terminal device, the first positioning reference signal to the first terminal device based on the first request.

3. The method according to claim 1 or 2, wherein the time domain feature comprises at least one of the following: the first positioning reference signal is sent at a slot level, a subslot level, or a time domain symbol level; the first positioning reference signal occupies at least one slot or at least one time domain symbol; when the at least one slot comprises a plurality of slots, the plurality of slots comprise a consecutive slot and/or a non-consecutive slot; or when the at least one time domain symbol comprises a plurality of time domain symbols, the plurality of time domain symbols comprise a consecutive time domain symbol and/or a non-consecutive time domain symbol.

4. The method according to any one of claims 1 to 3, wherein the frequency domain feature comprises at least one of the following: a sending bandwidth of the first positioning reference signal, a resource pool in which the sending bandwidth is located, or a frequency occupied by the first positioning reference signal.

5. The method according to any one of claims 1 to 4, wherein the positioning method comprises any one of the following: a round trip time RTT positioning method, an angle of arrival AOA positioning method, an angle of departure AOD positioning method, or a time difference of arrival TDOA positioning method.

6. The method according to claim 5, wherein when the positioning method is the AOD positioning method, the first request further comprises sixth information, and the sixth information indicates an AOD angle positioning mode used for the first positioning reference signal.

7. The method according to any one of claims 1 to 5, wherein the third information indicates an AOD angle positioning mode used for the first positioning reference signal, to indicate, by using the AOD angle positioning mode indicated by the third information, that the positioning method is the AOD positioning method.

8. The method according to claim 6 or 7, wherein the AOD angle positioning mode used for the first positioning reference signal comprises a first mode or a second mode, the first mode comprises that the second terminal device sends the first positioning reference signal in a beam switching manner, and the second mode comprises that the second terminal device sends the first positioning reference signal in an antenna switching manner.

9. The method according to any one of claims 1 to 8, wherein the first information further indicates whether the first terminal device sends a second positioning reference signal to the second terminal device.

10. The method according to claim 9, wherein the first information is indication information; and

    when a value of the indication information is a first value, it indicates that the first terminal device requests the second terminal device to send the first positioning reference signal and the first terminal device sends the second positioning reference signal to the second terminal device; or
    when a value of the indication information is a second value, it indicates that the first terminal device requests the second terminal device to send the first positioning reference signal and the first terminal device does not send the second positioning reference signal to the second terminal device.

11. The method according to any one of claims 1 to 10, wherein the first information is carried in sidelink control information SCI, and at least one of the second information, the third information, the fourth information, and the fifth information is carried in a sidelink media access control control element SL MAC CE.

12. The method according to any one of claims 1 to 10, wherein the first request carried in SCI or an SL MAC CE.

13. The method according to any one of claims 1 and 3 to 12, wherein the method further comprises:

    obtaining, by the first terminal device, a first measurement result, wherein the first measurement result is obtained by the first terminal device through measurement based on the first positioning reference signal; and
    positioning, by the first terminal device, the first terminal device and/or the second terminal device based on the first measurement result.

14. The method according to any one of claims 1 and 3 to 13, wherein after the sending, by a first terminal device, a first request to a second terminal device, and before the receiving, by the first terminal device, the first positioning reference signal from the second terminal device, the method further comprises:
sending, by the first terminal device, the second positioning reference signal to the second terminal device.

15. The method according to claim 14, wherein the method further comprises:

obtaining, by the first terminal device, the first measurement result, wherein the first measurement result is obtained by the first terminal device through measurement based on the first positioning reference signal; receiving, by the first terminal device, a second measurement result from the second terminal device, wherein the second measurement result is obtained by the second terminal device through measurement based on the second positioning reference signal; and positioning, by the first terminal device, the first terminal device and/or the second terminal device based on the first measurement result and the second measurement result.

16. The method according to any one of claims 2 to 12, wherein after the receiving, by a second terminal device, a first request from a first terminal device, and before the sending, by the second terminal device, the first positioning reference signal to the first terminal device based on the first request, the method further comprises: receiving, by the second terminal device, the second positioning reference signal from the first terminal device.

17. The method according to claim 16, wherein the method further comprises:

obtaining, by the second terminal device, a second measurement result through measurement based on the second positioning reference signal; and sending, by the second terminal device, the second measurement result to the first terminal device.

18. The method according to any one of claims 1 and 3 to 15, wherein the method further comprises:

receiving, by the first terminal device, a second request from the second terminal device, wherein the second request is used to request the first terminal device to send a third positioning reference signal; and after the receiving, by the first terminal device, the first positioning reference signal from the second terminal device, the method further comprises: sending, by the first terminal device, the third positioning reference signal to the second terminal device.

19. The method according to claim 18, wherein the method further comprises:

sending, by the first terminal device, a third request to the second terminal device, wherein the third request is used to request the second terminal device to send a fourth positioning reference signal; and after the sending, by the first terminal device, the third positioning reference signal to the second terminal device, the method further comprises: receiving, by the first terminal device, a fourth positioning reference signal from the second terminal device.

20. The method according to any one of claims 2 to 12, 16, and 17, wherein the method further comprises:

sending, by the second terminal device, a second request to the first terminal device, wherein the second request is used to request the first terminal device to send a third positioning reference signal; and after the sending, by the second terminal device, the first positioning reference signal to the first terminal device based on the first request, the method further comprises: receiving, by the second terminal device, the third positioning reference signal from the first terminal device.

21. The method according to claim 20, wherein the method further comprises:

receiving, by the second terminal device, a third request from the first terminal device, wherein the third request is used to request the second terminal device to send a fourth positioning reference signal; and after the receiving, by the second terminal device, the third positioning reference signal from the first terminal device, the method further comprises: sending, by the second terminal device, the fourth positioning reference signal to the first terminal device.

22. The method according to any one of claims 1 and 3 to 12, wherein the method further comprises:

sending, by the first terminal device, a fourth request to a third terminal device, wherein the fourth request is used to request the third terminal device to send a fifth positioning reference signal; and

receiving, by the first terminal device, the fifth positioning reference signal from the third terminal device.

23. The method according to any one of claims 1, 3 to 15, 18, 19, and 22, wherein before the sending, by a first terminal device, a first request to a second terminal device, the method further comprises:
   receiving, by the first terminal device, seventh information from the second terminal device, wherein the seventh information indicates whether the second terminal device accepts the first request initiated by the first terminal device to the second terminal device.

24. The method according to any one of claims 2 to 12, 16, 17, 20, and 21, wherein before the sending, by a first terminal device, a first request to a second terminal device, the method further comprises:
   sending, by the second terminal device, seventh information to the first terminal device, wherein the seventh information indicates whether the second terminal device accepts the first request initiated by the first terminal device to the second terminal device.

25. A communication apparatus, wherein the communication apparatus comprises a transceiver module, and the transceiver module is configured to perform the sending and receiving operations according to any one of claims 1, 3 to 15, 18, 19, 22, and 23.

26. The communication apparatus according to claim 25, wherein the communication apparatus further comprises a processing module, and the processing module is configured to perform the processing operation according to any one of claims 1, 3 to 15, 18, 19, 22, and 23.

27. A communication apparatus, wherein the communication apparatus comprises a transceiver module, and the transceiver module is configured to perform the sending and receiving operations according to any one of claims 2 to 12, 16, 17, 20, 21, and 24.

28. The communication apparatus according to claim 27, wherein the communication apparatus further comprises a processing module, and the processing module is configured to perform the processing operation according to any one of claims 2 to 12, 16, 17, 20, 21, and 24.

29. A communication apparatus, wherein the communication apparatus comprises a processor, and the processor is configured to execute a computer program or computer instructions in a memory to perform the method according to any one of claims 1, 3 to 15, 18, 19, 22, and 23 or the method according to any one of claims 2 to 12, 16, 17, 20, 21, and 24.

30. The communication apparatus according to claim 29, wherein the communication apparatus further comprises the memory.

31. A computer-readable storage medium, wherein the computer-readable storage medium stores a computer program, and when the computer program is executed by a communication apparatus, the communication apparatus is enabled to perform the method according to any one of claims 1, 3 to 15, 18, 19, 22, and 23, or the communication apparatus is enabled to perform the method according to any one of claims 2 to 12, 16, 17, 20, 21, and 24.

FIG. 1

FIG. 2

FIG. 3

FIG. 4

First terminal device | Second terminal device

Radio resource control RRC ↔ Radio resource control RRC

Packet data convergence protocol PDCP ↔ Packet data convergence protocol PDCP

Radio link control protocol RLC ↔ Radio link control protocol RLC

Media access control MAC ↔ Media access control MAC

Physical PHY ↔ Physical PHY

FIG. 5

First terminal device | Second terminal device

Ranging/Sidelink positioning protocol RSPP ↔ Ranging/Sidelink positioning protocol RSPP

Packet data convergence protocol PDCP ↔ Packet data convergence protocol PDCP

Radio link control protocol RLC ↔ Radio link control protocol RLC

Media access control MAC ↔ Media access control MAC

Physical PHY ↔ Physical PHY

FIG. 6

First terminal device        Second terminal device

701a: Seventh information
(indicating whether the second terminal device
accepts a first request initiated by the first
terminal device to the second terminal device)

701: First request
(used to request the second terminal device
to send a first positioning reference signal)

702a: Second sidelink information SCI

702: First positioning reference signal

703: Obtain a first measurement result

704: Position the first terminal device and/or the second
terminal device based on the first measurement result

FIG. 7

FIG. 8

First terminal device

Second terminal device

901a: Seventh information
(indicating whether the second terminal
device accepts a first request initiated by
the first terminal device to the second
terminal device)

901: First request
(used to request the second terminal device
to send a first positioning reference signal)

902: Second positioning reference signal

903: Second request
(used to request the first terminal device to
send a third positioning reference signal)

904a: Second sidelink information SCI

904: First positioning reference signal

905a: Third sidelink information SCI

905: Third positioning reference signal

906: Obtain a third measurement result through
measurement based on the second positioning
reference signal and the third positioning
reference signal

907: Third measurement result

908: Obtain a first measurement result

909: Position the first terminal device and/or the
second terminal device based on the first
measurement result and the third measurement result

FIG. 9

First terminal device

Second terminal device

1001a: Seventh information
(indicating whether the second terminal device accepts a first request initiated by the first terminal device to the second terminal device)

1001: First request
(used to request the second terminal device to send a first positioning reference signal)

1002: Second request
(used to request the first terminal device to send a third positioning reference signal)

1003a: Second sidelink information SCI

1003: First positioning reference signal

1004: Third request
(used to request the second terminal device to send a fourth positioning reference signal)

1005a: Third sidelink information SCI

1005: Third positioning reference signal

1006a: Fourth sidelink information SCI

1006: Fourth positioning reference signal

1007: Obtain a fourth measurement result through measurement based on the third positioning reference signal

1008: Fourth measurement result

1009: Obtain a fifth measurement result

1010: Position the first terminal device and/or the second terminal device based on the fourth measurement result and the fifth measurement result

FIG. 10

Third terminal device | First terminal device | Second terminal device

1101: First request
(used to request the second terminal device to send a first positioning reference signal)

1102: Fourth request
(used to request the third terminal device to send a fifth positioning reference signal)

1103a: Second sidelink information SCI

1104a: Fifth sidelink information SCI

1103: First positioning reference signal (where optionally, the first positioning reference signal is sent for a plurality of times)

1104: Fourth positioning reference signal
(where optionally, the fourth positioning reference signal is sent for a plurality of times)

1105: Obtain a first measurement result through measurement based on the first positioning reference signal and the fourth positioning reference signal

1106: Position the first terminal device and/or the second terminal device based on the first measurement result

FIG. 11

Communication apparatus 1200

1201

1202

Transceiver module

Processing module

FIG. 12

FIG. 13

FIG. 14

1501

Communication apparatus
1500

Processor

Memory

Transceiver

1502

1503

FIG. 15

## INTERNATIONAL SEARCH REPORT

| International application No. |
| --- |
| **PCT/CN2023/119729** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 侧链路, 副链路, 定位参考信号, 请求, 指示, 测量, 到达角, sidelink, SL, PC5, PC5-S, PRS, SL-PRS, request, indicate, measure, AOD, RTT

**C. DOCUMENTS CONSIDERED TO BE RELEVANT**

| Category* | Citation of document, with indication, where appropriate, of the relevant passages | Relevant to claim No. |
| --- | --- | --- |
| PX | WO 2023143093 A1 (HUAWEI TECHNOLOGIES CO., LTD.) 03 August 2023 (2023-08-03) description, page 23, line 3 to page 24, line 12 | 1-31 |
| X | WO 2022155262 A1 (IDAC HOLDINGS, INC.) 21 July 2022 (2022-07-21) description, paragraphs [0107]-[0185], and figures 1-11 | 1-31 |
| A | WO 2022085894 A1 (LG ELECTRONICS INC.) 28 April 2022 (2022-04-28) entire document | 1-31 |
| A | WO 2022143092 A1 (DATANG MOBILE COMMUNICATIONS EQUIPMENT CO., LTD.) 07 July 2022 (2022-07-07) entire document | 1-31 |
| A | INTERDIGITAL, INC. "Discussion on On-demand reference signals for positioning" *3GPP RAN WG2 Meeting #112-e R2-2008887*, 13 November 2020 (2020-11-13), entire document | 1-31 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **10 November 2023** | **16 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119729**

| Patent document cited in search report | | | Publication date (day/month/year) | Patent family member(s) | | | Publication date (day/month/year) |
|---|---|---|---|---|---|---|---|
| WO | 2023143093 | A1 | 03 August 2023 | None | | | |
| WO | 2022155262 | A1 | 21 July 2022 | KR | 20230131293 | A | 12 September 2023 |
| | | | | CN | 116803152 | A | 22 September 2023 |
| WO | 2022085894 | A1 | 28 April 2022 | EP | 4236154 | A1 | 30 August 2023 |
| | | | | KR | 20230092952 | A | 26 June 2023 |
| WO | 2022143092 | A1 | 07 July 2022 | CN | 114698098 | A | 01 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211145040